# FASCICULE DE BREVET EUROPEEN

(11) **EP 3 328 811 B1**
(45) Date de publication et mention de la délivrance du brevet: **11.03.2020**
(21) Numéro de dépôt: 16757304.7
(22) Date de dépôt: 27.07.2016
(51) Int. Cl.: C04B 28/06, C04B 7/32, C09K 8/46

(54) **CIMENT D'ALUMINATES DE CALCIUM À LONGUE OUVRABILITÉ ET À DURCISSEMENT FAVORISÉ PAR UNE ÉLÉVATION DE TEMPÉRATURE, ET UTILISATION ASSOCIÉE**
CALCIUMALUMINATZEMENT MIT LANGER BEARBEITBARKEIT MIT DURCH TEMPERATURERHÖHUNG GEFÖRDERTER AUSHÄRTUNG UND ZUGEHÖRIGE VERWENDUNG
LONG-WORKABILITY CALCIUM ALUMINATE CEMENT WITH HARDENING PROMOTED BY A TEMPERATURE INCREASE, AND RELATED USE

(30) Priorité: 27.07.2015 FR 1557167
(43) Date de publication de la demande: 06.06.2018
(73) Titulaire: ImerTech SAS, 75015 Paris (FR)
(72) Inventeur: ESPINOSA, Bruno, 69740 Genas (FR); FITZGERALD, Mark, Winslow, Humble, Texas 77346 (US); ALT, Charles, Walter, Chesapeake, Virginia 23322 (US); THOUILLEUX, Philippe, 38080 l'Isle d'Abeau (FR); SOTH, Ratana, 69003 Lyon (FR); LIEVIN, Michaël, 38630 Veyrins-Thuellin (FR)
(74) Mandataire: Jacobacci Coralis Harle
(86) Numéro de dépôt international: PCT/FR2016/051948
(87) Numéro de publication internationale: WO 2017/017376

(56) Documents cités:
- EP-A1- 2 105 419
- FR-A1- 2 873 366
- JP-A- 2004 299 951

## Description

### DOMAINE TECHNIQUE AUQUEL SE RAPPORTE L'INVENTION

La présente invention concerne de manière générale le domaine des ciments dont le durcissement en présence d'eau est favorisé par une élévation de température.

Elle concerne en particulier un ciment d'aluminates de calcium comprenant un aluminate de calcium avec une première phase minéralogique cristallisée de dialuminate de calcium CA2 comportant un oxyde de calcium CaO pour deux oxydes d'aluminium Al₂O₃ et/ou une deuxième phase minéralogique cristallisée de silicate d'alumine bicalcique C2AS comportant deux oxydes de calcium CaO pour un oxyde d'aluminium Al₂O₃ et un dioxyde de silicium SiO₂.

Elle concerne également une composition cimentaire comprenant un tel ciment d'aluminates de calcium, mélangé à de l'eau et éventuellement à d'autres composés tels que des cendres volantes, un laitier granulé de haut-fourneau, une farine de silice, de la fumée de silice, du métakaolin, du quartz, du calcaire fin, du sable, et des adjuvants.

L'invention trouve une application particulièrement avantageuse dans toute application où une élévation de température est nécessaire ou subie, comme par exemple la consolidation des puits de forage pétroliers.

### ARRIERE-PLAN TECHNOLOGIQUE

Un ciment est une poudre minérale adaptée à être mélangée avec de l'eau pour former une composition cimentaire à consistance pâteuse ou liquide qui durcit pour former un matériau final durci.

Il existe de nombreux ciments sur le marché qui se distinguent, d'une part, par leurs propriétés réactives avec l'eau, et d'autre part, par les propriétés mécaniques et chimiques des matériaux finaux durcis qu'ils permettent d'obtenir.

Des exemples de ces ciments sont décrits dans les documents JP2004299951 et EP2105419.

Par exemple encore, les ciments d'aluminates de calcium procurent aux matériaux finaux durcis des propriétés chimiques spécifiques de résistance élevée à la corrosion acide et des propriétés mécaniques de résistance élevée aux hautes températures et pressions.
ciment avec l'eau, c'est-à-dire la durée, aussi appelée « temps ouvert », pendant laquelle cette composition cimentaire présente une viscosité adaptée à son utilisation, à savoir, par exemple, une viscosité faible pour permettre son injection dans des fissures, ou une viscosité modérée pour permettre sa mise en forme dans des coffrages.

Ces propriétés réactives déterminent également la cinétique de durcissement de la composition cimentaire lors de phases ultérieures de la réaction du ciment avec l'eau. Il s'agit notamment des caractéristiques de la prise hydraulique de la composition cimentaire, la prise hydraulique étant une phase exothermique accélérée de la réaction d'hydratation du ciment par l'eau, et de la vitesse à laquelle le durcissement final du matériau se produit après la prise hydraulique, à savoir en combien de temps le matériau final durci atteint une résistance mécanique souhaitée.

D'autre part, il est connu qu'une température relativement élevée, c'est-à-dire supérieure à 50°C environ, voire supérieure à 30°C, peut accélérer la cinétique de durcissement d'une composition cimentaire, et réduire sensiblement son ouvrabilité notamment en favorisant l'épaississement de la composition cimentaire et en déclenchant la prise hydraulique plus rapidement.

Pour diminuer l'effet de la température sur la réactivité des compositions cimentaires, il est courant d'ajouter des adjuvants aux compositions cimentaires, tels que des retardateurs de prise.

Cependant, plusieurs retardateurs pouvant être utilisés dans une même composition cimentaire, ces retardateurs peuvent interagir entre eux et/ou avec les autres additifs de la composition cimentaire, et il devient alors difficile de prédire la cinétique de durcissement de cette composition cimentaire.

De plus, la présence de retardateur dans la composition cimentaire peut conduire à un abaissement de la résistance mécanique du matériau final durci.

En outre, il est également connu que, du fait de ces problématiques d'ouvrabilité et de cinétique de durcissement, les compositions cimentaires à base d'aluminates de calcium sont généralement fabriquées sur site, c'est-à-dire que l'eau est rajoutée au ciment directement sur le lieu d'utilisation des compositions cimentaires.

Il arrive ainsi régulièrement que, sur site, les compositions cimentaires à base de ciments d'aluminates de calcium soient préparées dans les lignes de production utilisées habituellement pour préparer les compositions cimentaires à base de ciment Portland.

Les lignes de production comportant des zones mortes difficiles à purger et/ou à nettoyer, il peut rester un peu de ciment d'une campagne de production à une autre. Ainsi, lors de la préparation d'une composition cimentaire à base d'un ciment Portland, il arrive que ce ciment Portland ait été pollué par des restes de ciment d'aluminate de calcium, ou inversement.

Or, il s'avère que les ciments Portland et les ciments d'aluminates de calcium interagissent entre eux, et que cette interaction accélère la cinétique de durcissement des compositions cimentaires obtenues. Ainsi, la prise hydraulique d'une composition cimentaire à base d'un mélange de ciment Portland et de ciment d'aluminates de calcium est initiée plus tôt que ce qui est attendu pour une composition cimentaire à base de ciment Portland ou de ciment d'aluminates de calcium seulement. Lorsque ce mélange résulte d'une pollution involontaire, l'accélération de prise peut entraîner un blocage des installations, ce qui est très problématique.

Une application dans laquelle interviennent généralement des températures élevées, et pour laquelle il est primordial de maîtriser l'ouvrabilité et la cinétique de durcissement des compositions cimentaires formées est la consolidation des puits de forage.

Le forage des puits, et en particulier des puits pétroliers, est un processus complexe qui consiste principalement à forer la roche tout en y introduisant un corps métallique tubulaire.

Il est connu de cimenter les parois des puits de forage à la fois pour renforcer le coffrage de ces puits, pour protéger de la corrosion le corps tubulaire qui y est inséré, et pour sceller ce corps tubulaire dans la roche avoisinante.

Pour ce faire, les industriels utilisent des compositions cimentaires sous forme de suspensions aqueuses communément appelées coulis (ou « *slurry »* en anglais), comprenant principalement un ciment, éventuellement des agrégats ou ajouts cimentaires spécifiques, dispersé dans une relativement grande quantité d'eau, qu'ils injectent dans le corps tubulaire jusqu'au fond de celui-ci. La suspension aqueuse remonte alors vers la surface, dans l'espace existant entre la paroi rocheuse et le corps tubulaire.

On comprend alors que l'ouvrabilité de la suspension aqueuse doit être telle que cette suspension aqueuse puisse être injectée jusqu'au fond du corps tubulaire, et que la prise hydraulique de la suspension aqueuse doit se produire à un moment contrôlé après la remontée vers la surface de cette suspension aqueuse, et ce en tenant compte des conditions souterraines de températures et de pressions élevées.

On connaît par exemple du document US20130299170 des compositions cimentaires complexes sous forme de suspensions aqueuses, adaptées à la consolidation des puits de forage pétrolier, qui comprennent des ciments d'aluminates de calcium et des retardateurs de prise comportant un acide organique et un mélange de polymères.

On connait également des documents US6143069 et US20040255822 des compositions cimentaires sous forme de suspension aqueuse de faible densité, adaptées à la consolidation des puits de forage pétrolier, comprenant un aluminate de calcium commercial, de la marque SECAR-60™ ou REFCON™, des cendres volantes, de l'eau, des retardateurs tels que des acides citriques, gluconiques ou tartriques et d'autres additifs tels que des agents moussants et des agents empêchant la perte de fluide.

Cependant, les compositions cimentaires ainsi formulées pour réduire l'effet de la température sur leur ouvrabilité et leur cinétique de durcissement sont particulièrement complexes. Elles engendrent par ailleurs l'utilisation de nombreux composés chimiques différents, ce qui peut avoir un effet néfaste sur l'environnement.

Il existe donc un besoin de pouvoir bénéficier des propriétés apportées par l'hydratation des aluminates de calcium tout en maîtrisant plus facilement la période d'ouvrabilité en particulier lorsque la température est élevée, et tolérant une certaine pollution par les ciments Portland ou dans les ciments Portland.

### OBJET DE L'INVENTION

Afin de remédier aux inconvénients précités de l'état de la technique, la présente invention propose un nouveau ciment d'aluminates de calcium, qui présente les propriétés avantageuses de résistance chimique et de résistance mécanique de ce type de ciment, ainsi qu'un temps ouvert naturellement long sans ajout de retardateur, et même en cas de mélange involontaire avec des ciments Portland.

Plus particulièrement, on propose selon l'invention un ciment d'aluminates de calcium tel que décrit en introduction, dans lequel la fraction massique de l'ensemble desdites première et deuxième phases minéralogiques dans ledit aluminate de calcium est supérieure ou égale à 80%.

Ainsi, grâce à ces phases minéralogiques cristallisées, le ciment d'aluminates de calcium selon l'invention présente une cinétique de durcissement maîtrisée, sans avoir besoin d'y ajouter de retardateur.

Plus précisément, la Demanderesse a constaté que les ciments d'aluminates de calcium comprenant ces phases minéralogiques présentaient, à température ambiante, une ouvrabilité extrêmement longue, et que la réactivité de ces phases avec l'eau était favorisée par une élévation de température. Ainsi, à température ambiante, la réactivité du ciment d'aluminates de calcium selon l'invention avec l'eau est faible et la cinétique de la réaction d'hydratation est très lente. L'ouvrabilité de la composition cimentaire à base de ce ciment est donc maîtrisée sans ajout de retardateurs de prise sous forme de composés chimiques additionnels.

En outre, la cinétique de durcissement est maîtrisée car la prise hydraulique peut être déclenchée et/ou accélérée par une élévation de température.

De plus, ces phases minéralogiques garantissent au ciment d'aluminates de calcium selon l'invention des interactions réduites avec les ciments Portland, ce qui réduit les problèmes liés à la contamination croisée entre ciments Portland et ciments d'aluminates de calcium.

Enfin, le ciment d'aluminates de calcium selon l'invention présente des propriétés de résistance mécanique aux hautes températures et aux hautes pressions, et de résistance chimique à la corrosion aux acides similaires à celles des ciments d'aluminates de calcium déjà connus dans l'état de l'art.

D'autres caractéristiques non limitatives et avantageuses du ciment d'aluminates de calcium conforme à l'invention, prises individuellement ou selon toutes les combinaisons techniquement possibles, sont les suivantes :
- ledit aluminate de calcium comprend également une partie amorphe, dont la fraction massique dans ledit aluminate de calcium est inférieure ou égale à 20% ;
- ledit aluminate de calcium comprend en outre une troisième phase minéralogique cristallisée d'aluminate de monocalcium CA comportant un oxyde de calcium CaO (noté C selon la notation des cimentiers) pour un oxyde d'aluminium Al₂O₃ (noté A selon la notation des cimentiers) et/ou une quatrième phase minéralogique cristallisée d'hexa-aluminate de calcium CA6 comportant un oxyde de calcium CaO pour six oxydes d'aluminium Al₂O₃, la fraction massique de l'ensemble des troisième et quatrième phases minéralogiques dans ledit aluminate de calcium étant inférieure ou égale à 20% ;

- ledit aluminate de calcium comprend en outre une phase minéralogique supplémentaire de sulfoaluminate de calcium C4A3$ comportant quatre oxydes de calcium CaO pour trois oxydes d'aluminium Al₂O₃ et un oxyde de soufre SO₃ (noté $ selon la notation des cimentiers) ;
- il comprend, en masse par rapport à la masse totale dudit aluminate de calcium : 0% à 5% d'un oxyde de fer Fe₂O₃, 0% à 5% d'un oxyde de titane TiO₂, 0% à 5% d'un oxyde de soufre SO₃, 0% à 5% d'un oxyde de magnésium MgO, 0% à 2% de composés alcalins ;
- il se présente sous la forme d'une poudre ayant une surface spécifique Blaine mesurée selon la norme NF-EN-196-6 comprise entre 2200 centimètres carré par gramme et 4500 centimètres carré par gramme, de préférence entre 2900 et 3900 centimètres carré par gramme ;
- il comprend, en masse par rapport à la masse totale dudit aluminate de calcium : 50% à 60% de première phase minéralogique cristallisée CA2, 26% à 32% de deuxième phase minéralogique cristallisée C2AS (S désignant la silice SiO₂ selon la notation des cimentiers), 2,5% à 3,5% de troisième phase minéralogique cristallisée CA, 0,5% à 1,5% d'une cinquième phase minéralogique cristallisée de ferro-aluminate tétracalcique C4AF (F désignant l'oxyde de fer Fe₂O₃ selon la notation des cimentiers), 10% à 15% de phases minéralogiques cristallisées supplémentaires ;
- le ciment d'aluminates de calcium selon l'invention comprend de 0,5% à 15% de phase minéralogique supplémentaire de sulfoaluminate de calcium C4A3$, en masse par rapport à la masse totale dudit aluminate de calcium.

L'invention propose également une composition cimentaire comprenant au moins le ciment d'aluminates de calcium selon l'invention mélangé à de l'eau, et éventuellement des ajouts cimentaires tels que des cendres volantes et/ou un laitier granulé de haut-fourneau et/ou une farine de silice et/ou de la fumée de silice et/ou du métakaolin, des granulats tels que du quartz et/ou du calcaire fin et/ou du sable, et des adjuvants.

L'invention propose également une utilisation du ciment d'aluminates de calcium tel que décrit précédemment, selon laquelle
a) on réalise une composition cimentaire en mélangeant au moins ledit ciment d'aluminates de calcium avec de l'eau,
b) on met en place ladite composition cimentaire,
c) on chauffe ladite composition cimentaire à une température comprise entre 50°C et 300°C, de préférence entre 80°C et 280° C, de manière à favoriser la prise de la composition cimentaire.

La composition cimentaire peut en outre comprendre des agrégats (par exemple du sable) et/ou des adjuvants (par exemple des retardateurs, accélérateur ou autre) connus de l'homme du métier.

Dans les conditions de températures de l'étape c), la pression est préférentiellement choisie élevée, c'est-à-dire supérieure ou égale à la pression de vapeur saturante, de sorte que l'eau soit présente sous forme liquide ou au moins sous forme de vapeur saturante.

En particulier, cette utilisation du ciment d'aluminates de calcium trouve une application particulièrement avantageuse dans la consolidation des puits de forage, et notamment des puits de forage pétrolier.

Pour cela, à l'étape a) de l'utilisation selon l'invention, la composition cimentaire se présente sous la forme d'une suspension aqueuse, et à l'étape b), la composition cimentaire est placée dans un puits de forage pétrolier.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est un diagramme ternaire chaux-alumine-silice, représenté en fraction massique de chaux, d'alumine et de silice ;
- la figure 2 est un zoom de la figure 1 dans la zone d'intérêt [II-II] pour décrire la plage de composition de l'aluminate de calcium selon l'invention.

Au sens de l'invention, et à moins qu'il n'en soit spécifié autrement, l'indication d'un intervalle de valeurs « X à Y » ou « entre X et Y », dans la présente invention, s'entend comme incluant les valeurs X et Y.

La présente invention a trait à un ciment d'aluminates de calcium adapté à être mélangé à de l'eau pour former une composition cimentaire dont l'ouvrabilité est naturellement longue, et dont la réactivité est favorisée par une élévation de température.

Dans la suite de la description, le terme « ciment » désignera une poudre adaptée à être mélangée avec de l'eau pour former une composition cimentaire susceptible de durcir pour former un matériau final dur.

Le terme « composition cimentaire » désignera le mélange du ciment avec de l'eau et éventuellement avec d'autres composés additionnels.

Enfin, comme il sera bien expliqué par la suite, la « réactivité » ou les « propriétés réactives » du ciment caractérisent l'aptitude de ce ciment à réagir avec de l'eau.

D'un point de vue chimique, le ciment d'aluminates de calcium selon l'invention comprend au moins un aluminate de calcium, c'est-à-dire un composé comprenant à la fois de l'oxyde de calcium et de l'oxyde d'aluminium.

Plus précisément, ici, l'aluminate de calcium du ciment selon l'invention comprend de l'oxyde de calcium couramment appelé chaux CaO, de l'oxyde d'aluminium couramment appelé alumine Al₂O₃, et du dioxyde de silicium couramment appelé silice SiO₂.

De manière à alléger les notations, comme le font classiquement les cimentiers dans leurs notations, nous abrègerons par la suite la chaux CaO par la lettre C, l'alumine Al₂O₃ par la lettre A et la silice SiO₂ par la lettre S.

Ces trois composés, à savoir la chaux C, l'alumine A et la silice S, constituent les composés majoritaires présents dans l'aluminate de calcium selon l'invention.

L'aluminate de calcium selon l'invention peut également comprendre, en masse par rapport à la masse totale dudit aluminate de calcium :
- 0% à 5% d'un oxyde de fer Fe₂O₃ (abrégé F selon la notation des cimentiers),
- 0% à 5% d'un oxyde de titane TiO₂ (abrégé T selon la notation des cimentiers),
- 0% à 5% d'un oxyde de soufre SO₃ (abrégé $ selon la notation des cimentiers),
- 0% à 5% d'un oxyde de magnésium MgO (abrégé M selon la notation des cimentiers),
- 0% à 2% de composés alcalins.

Ces autres composés sont minoritaires dans l'aluminate de calcium du ciment selon l'invention. Ils constituent des impuretés qui proviennent généralement des matières premières utilisées pour la fabrication de l'aluminate de calcium.

D'un point de vue minéralogique, le ciment d'aluminates de calcium selon l'invention comprend une partie cristalline et une partie amorphe.

Ces parties cristalline et amorphe caractérisent l'état microscopique du ciment d'aluminates de calcium selon l'invention : la partie cristalline de ce ciment d'aluminate de calcium comprend des atomes et/ou molécules ordonnés selon une géométrie particulière, en phases minéralogiques cristallisées, tandis que la partie amorphe de ce ciment d'aluminates de calcium comprend des atomes et/ou molécules qui sont agencés de manière désordonnée les uns par rapport aux autres, c'est-à-dire sans ordre particulier.

Ici, l'aluminate de calcium du ciment selon l'invention est principalement cristallin.

Plus précisément, de façon avantageuse, dans le ciment d'aluminates de calcium selon l'invention, la fraction massique de ladite partie cristalline dans ledit aluminate de calcium est supérieure ou égale à 80%.

Autrement dit, la masse de la partie cristalline par rapport à la masse totale de l'aluminate de calcium du ciment selon l'invention, est supérieure ou égale à 80%.

Ainsi, dans le ciment d'aluminates de calcium selon l'invention, la fraction massique de la partie amorphe est inférieure ou égale à 20%.

La partie cristalline présente des phases minéralogiques cristallisées qui permettent de décrire plus spécifiquement l'aluminate de calcium du ciment selon l'invention.

En effet, la quantité et la nature des phases minéralogiques cristallisées présentes dans le ciment selon l'invention rendent compte de la composition chimique dudit aluminate de calcium.

Dans la suite de la description, ces « phases minéralogiques cristallisées » seront parfois appelées « phases minéralogiques ».

Ici en particulier, les phases minéralogiques cristallisées décrivent à la fois la structure à l'échelle atomique et la composition chimique de l'aluminate de calcium, dans la mesure où elles font intervenir plusieurs composés différents.

En particulier, ici, les phases minéralogiques de l'aluminate de calcium du ciment selon l'invention font intervenir la chaux C, l'alumine A et la silice S.

De façon générale, les phases minéralogiques cristallisées des aluminates de calcium sont nombreuses. Parmi elles, on compte :
- des phases ne comportant que de la chaux C et de l'alumine A, telles que :
   - la phase d'aluminate de monocalcium CaAl₂O₄ notée CA, dont la maille cristalline comporte une molécule de chaux C pour une molécule d'alumine A,
   - la phase de dialuminate de calcium CaAl₄O₇ notée CA2, dont la maille cristalline comporte une molécule de chaux C pour deux molécules d'alumine A,
   - la phase d'hexa-aluminate de calcium notée CA6, dont la maille cristalline comporte une molécule de chaux C pour six molécules d'alumine A,
   - la phase d'aluminate tricalcique notée C3A, dont la maille cristalline comporte trois molécules de chaux C pour une molécule d'alumine A,
   - la phase d'hepta-aluminate de dodecacalcium notée C12A7, dont la maille cristalline comporte deux molécules de chaux C pour sept molécules d'alumine A ;
- des phases ne comportant que de la chaux C et de la silice S, telles que :
   - la phase de silicate monocalcique notée CS, dont la maille cristalline comporte une molécule de chaux C pour une molécule de silice S ;
   - la phase de silicate bicalcique notée C2S, dont la maille cristalline comporte deux molécules de chaux C pour une molécule de silice S,
   - la phase de silicate tricalcique notée C3S, dont la maille cristalline comporte trois molécules de chaux C pour une molécule de silice S ;
   - la phase de bisilicate tricalcique notée C3S2, dont la maille cristalline comporte trois molécules de chaux C pour deux molécules de silice S ;
- des phases ne comportant que de l'alumine A et de la silice S, telles que :
   - la phase de bisilicate de tri-aluminate notée A3S2, dont la maille cristalline comporte trois molécules d'alumine A pour deux molécules de silice S ;
- des phases comportant à la fois de la chaux C, de l'alumine A et de la silice S, telles que :
   - la phase de silicate d'alumine bicalcique notée C2AS, dont la maille cristalline comporte deux molécules de chaux C pour une molécule d'alumine A et une molécule de silice S,
   - la phase de bisilicate d'alumine monocalcique notée CAS2, dont la maille cristalline comporte une molécule de chaux C pour une molécule d'alumine A et deux molécules de silice S ;
      cette liste n'étant pas exhaustive.

Ces phases minéralogiques sont généralement choisies en fonction des propriétés qu'elles procurent au ciment d'aluminates de calcium, notamment en termes de réactivité et de propriété mécanique du matériau final durci.

Il est courant de représenter graphiquement dans un diagramme ternaire les différentes phases minéralogiques que peut adopter un aluminate de calcium en fonction de la proportion relative de chacun des trois composés chaux C, alumine A et silice S dans ledit aluminate de calcium.

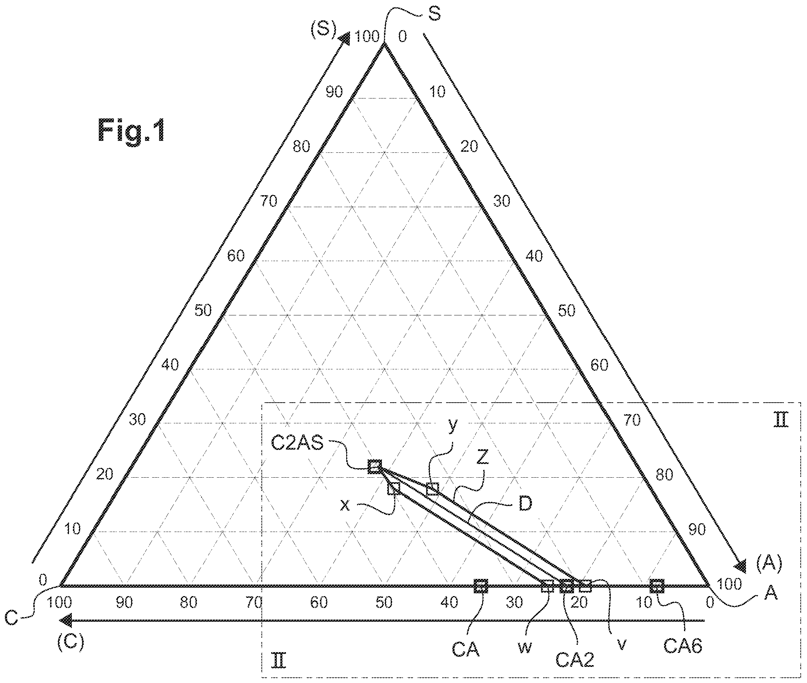

On a représenté un tel diagramme ternaire sur la figure 1 présentant certaines des différentes phases minéralogiques pouvant coexister dans un aluminate de calcium, en fonction de la proportion massique de chaux C, d'alumine A et de silice S contenue dans ledit aluminate de calcium.

Sur ce diagramme, on peut lire la fraction massique de chaux C contenue dans l'aluminate de calcium sur le côté du triangle situé entre les sommets A et C, la fraction massique désignant la masse de chaux C contenue dans l'aluminate de calcium par rapport à la masse totale de chaux C, d'alumine A et de silice S contenue dans ledit aluminate de calcium.

Cette fraction massique de chaux C se retrouve à l'intérieur du diagramme ternaire tout le long d'une droite parallèle au côté du triangle opposé au sommet C.

Similairement, on peut lire la fraction massique d'alumine A contenue dans l'aluminate de calcium sur le côté du triangle situé entre les sommets S et A, et cette fraction massique d'alumine A se retrouve à l'intérieur du diagramme ternaire tout le long de la droite parallèle au côté du triangle opposé au sommet A.

De même, la fraction massique de silice S contenue dans l'aluminate de calcium sur le côté du triangle situé entre les sommets C et S, et cette fraction massique de silice S se retrouve à l'intérieur du diagramme ternaire tout le long de la droite parallèle au côté du triangle opposé au sommet S.

En outre, sur ce diagramme ternaire, apparaissent des points particuliers qui représentent des phases minéralogiques pures. Autrement dit, si la composition de la partie cristalline de l'aluminate de calcium correspond exactement à la fraction molaire de chaux C, d'alumine A et de silice S de ce point particulier, alors ladite partie cristalline de l'aluminate de calcium comprend 100% de cette phase minéralogique cristallisée particulière. C'est le cas par exemple au niveau du point C2AS, ou du point CA ou encore des points CA2 ou CA6.

En pratique, il est rare que l'aluminate de calcium comprennent une seule phase pure, il comprend plus généralement plusieurs phases qui coexistent.

Ici, dans l'aluminate de calcium selon l'invention, les phases minéralogiques cristallisées majoritaires sont les suivantes :
- la phase CA2, dite première phase minéralogique cristallisée,
- la phase C2AS, dite deuxième phase minéralogique cristallisée.

Plus particulièrement, de façon remarquable, la fraction massique de l'ensemble desdites première et deuxième phases minéralogiques CA2, C2AS dans ledit aluminate de calcium est supérieure ou égale à 80%.

Autrement dit, la masse cumulée des première et deuxième phases minéralogiques CA2, C2AS représente au moins 80% de la masse totale de l'aluminate de calcium du ciment d'aluminates de calcium selon l'invention.

Ainsi, contrairement aux aluminates de calcium décrits dans l'état de la technique, dont la phase minéralogique majoritaire est la phase CA, ici, la ou les phases minéralogiques majoritaires sont les première et deuxième phases minéralogiques CA2, C2AS.

Les 20% restant de l'aluminate de calcium du ciment selon l'invention, en masse par rapport à la masse totale dudit aluminate de calcium, peuvent comprendre des phases minéralogiques minoritaires telles que :
- la phase CA, dite troisième phase minéralogique cristallisée, et
- la phase CA6, dite quatrième phase minéralogique cristallisée.

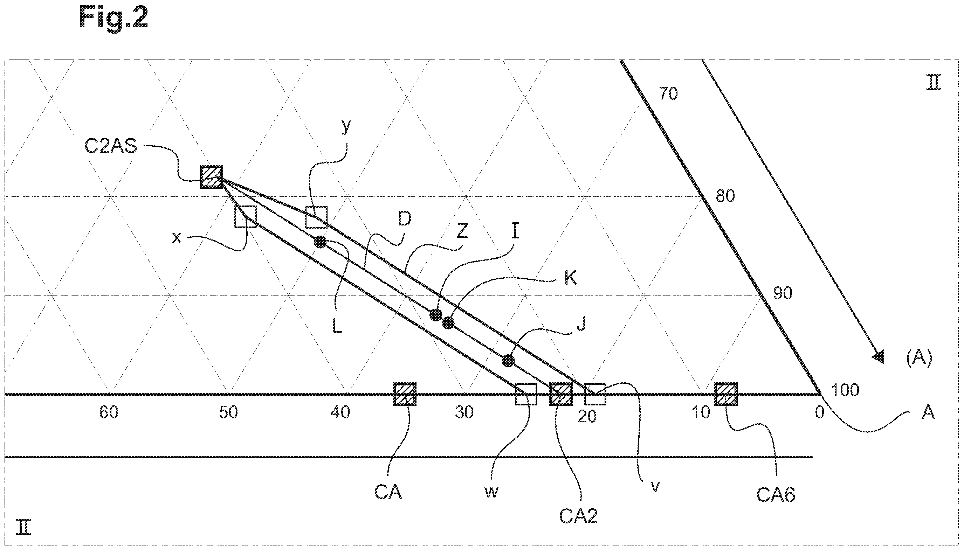

En effet, comme le montre le diagramme ternaire des figures 1 et 2, ces troisième et quatrième phases minéralogiques CA, CA6 se trouvent à proximité directe des première et deuxième phases minéralogiques CA2, C2AS, de sorte que, lors de la fabrication de l'aluminate de calcium du ciment selon l'invention, il est très probable de former ces troisième et quatrième phases minéralogiques CA, CA6.

De préférence, la fraction massique de l'ensemble des troisième et quatrième phases minéralogiques cristallisées CA, CA6 dans ledit aluminate de calcium du ciment d'aluminates de calcium selon l'invention est inférieure ou égale à 20%.

Les 20% restant de l'aluminate de calcium du ciment selon l'invention peuvent également comprendre les composés minoritaires constituant les impuretés de l'aluminate de calcium selon l'invention évoquées plus haut : oxyde de fer Fe₂O₃ (F), oxyde de titane TiO₂ (T), oxyde de soufre SO₃ ($), oxyde de magnésium MgO, ou encore composés alcalins.

Notamment, les composés minoritaires peuvent former des phases minéralogiques avec au moins un des composés majoritaires de l'aluminate de calcium que sont l'alumine A, la chaux C et la silice S.

En particulier, les 20% restant de l'aluminate de calcium du ciment d'aluminates de calcium selon l'invention peuvent comprendre une phase minéralogique supplémentaire de sulfoaluminate de calcium C4A3$ comportant quatre oxydes de calcium CaO pour trois oxydes d'aluminium Al₂O₃ et un oxyde de soufre SO₃.

Cette phase minéralogique supplémentaire C4A3$ présentant une maille cristalline comportant quatre molécules de chaux C pour trois molécules d'alumine A et une molécule d'oxyde de soufre $ est aussi appelée Ye'elimite.

Le ciment d'aluminates de calcium selon l'invention peut ainsi comprendre 0,5% à 15%, de préférence de 0,5% à 12%, de cette phase minéralogique supplémentaire de sulfoaluminate de calcium C4A3$, en masse par rapport à la masse totale dudit aluminate de calcium.

Avantageusement, la phase minoritaire Ye'elimite a un effet sur la réactivité de la composition cimentaire. Notamment, plus la proportion de phase minoritaire Ye'elimite C4A3$ augmente dans la composition cimentaire, plus la viscosité, à température ambiante, de cette composition cimentaire augmente. Cet effet est encore plus prononcé lorsque la température environnant la composition cimentaire augmente.

La phase minoritaire Ye'elimite a également un effet sur la réactivité de la composition cimentaire à température élevée. Notamment plus la proportion de phase minoritaire Ye'elimite C4A3$ augmente dans la composition cimentaire, plus le temps de prise est allongé à température élevée.

Dans le cadre de la fabrication d'un ciment adapté à une application dans le forage de puits pétroliers, le choix d'une composition d'aluminate de calcium comprenant une proportion non nulle de phase minoritaire Ye'elimite semble particulièrement avantageuse. En particulier, une proportion comprise entre 3 et 5 %, par exemple égale à 3%, 4% ou 5% de la phase Ye'elimite C4A3$ est appropriée.

Ces 20% restant comprennent également la partie amorphe de l'aluminate de calcium du ciment selon l'invention, s'il en existe une.

Sur le diagramme ternaire des figures 1 et 2, on trouve une droite particulière D reliant les points particuliers représentant les première et deuxième phases minéralogiques CA2, C2AS.

Si l'aluminate de calcium du ciment selon l'invention appartient à cette droite particulière D, alors il comprend entre 100% de première phase minéralogique CA2 et 100% de deuxième phase minéralogique C2AS.

Autrement dit, si l'aluminate de calcium du ciment selon l'invention appartient à cette droite particulière D, cet aluminate de calcium est cristallin, et la fraction massique de l'ensemble desdites première et deuxième phases minéralogiques CA2, C2AS dans l'aluminate de calcium du ciment selon l'invention est égale à 100%.

Ainsi, pour que la fraction massique de l'ensemble desdites première et deuxième phases minéralogiques CA2, C2AS dans ledit aluminate de calcium soit supérieure ou égale à 80%, cet aluminate de calcium doit être situé dans une zone Z proche de cette droite particulière D.

Cette zone Z est représentée graphiquement sur les figures 1 et 2. Les points v, w, x et y des figures correspondent aux compositions minéralogiques suivantes :
- le point v comprend 80% de première phase minéralogique CA2 et 20% de quatrième phase minéralogique CA6,
- le point w comprend 80% de première phase minéralogique CA2 et 20% de troisième phase minéralogique CA,
- le point x comprend 80% de deuxième phase minéralogique C2AS et 20% de troisième phase minéralogique CA, et
- le point y comprend 80% de première phase minéralogique C2AS et 20% de quatrième phase minéralogique CA6.

Ainsi, la surface du diagramme ternaire délimitée par le contour reliant les points [v - CA2 - w - x - C2AS - y - v] correspond à la zone Z à l'intérieur de laquelle la somme des première et deuxième phases CA2, C2AS est supérieure ou égale à 80%.

En outre, il est possible de retrouver la composition chimique d'un aluminate de calcium en connaissant sa position dans le diagramme ternaire.

Par exemple, la composition du point Y du diagramme ternaire des figures 1 et 2 est de 34,4% en chaux C, 48,1% en alumine A, et 17,5% en silice S.

Ainsi, selon le même principe, les plages de composition chimique en chaux C, en alumine A et en silice S de n'importe quel aluminate de calcium appartenant à la zone Z peuvent également être déterminées graphiquement sur le diagramme ternaire à l'aide de la figure 2.

Bien entendu, lorsque des composés minoritaires sont présents dans l'aluminate de calcium, il est encore possible de positionner cet aluminate de calcium dans le diagramme ternaire en déterminant les proportions relatives de chaux C, d'alumine A et de silice S par rapport à la masse totale de chaux C, alumine A et silice S compris dans cet aluminate de calcium.

Par ailleurs, de manière surprenante, les première et deuxième phases minéralogiques CA2, C2AS présentent une réactivité particulière lorsqu'elles sont en présence d'eau.

En effet, ces première et deuxième phases minéralogiques CA2, C2AS sont peu réactives avec l'eau à température ambiante. En d'autres termes, elles sont adaptées à réagir très lentement avec l'eau à température ambiante.

On entend ici qu'une phase minéralogique réagit avec l'eau lorsqu'elle est hydratée par l'eau, et il est possible de caractériser cette réactivité par une grandeur appelée « degré d'hydratation » de la phase minéralogique.

Le degré d'hydratation traduit la capacité d'une phase minéralogique à être hydratée par l'eau, c'est-à-dire à ce que les molécules constituant la maille cristalline de ladite phase minéralogique passent en solution dans l'eau sous forme d'ions, autrement dit il s'agit d'évaluer l'aptitude des liaisons existant entre les molécules constituant la phase minéralogique à être rompues par interaction avec l'eau.

Néanmoins, comme il sera démontré dans les exemples, les première et deuxième phases minéralogiques CA2, C2AS sont adaptées à réagir efficacement avec l'eau sous l'effet d'une élévation de température.

Autrement dit, le degré d'hydratation de ces première et deuxième phases minéralogiques augmente avec la température.

En particulier, ces première et deuxième phases minéralogiques CA2, C2AS sont adaptées à réagir avec l'eau de manière beaucoup plus rapide qu'à température ambiante lorsque la température de cure est comprise entre 50 degrés Celsius (°C) et 300°C, de préférence ente 80°C et 280°C.

Avantageusement, il est en outre possible d'ajuster la quantité relative de chacune des première et deuxième phases minéralogiques CA2, C2AS comprises dans le ciment d'aluminates de calcium selon l'invention pour ajuster la réactivité du ciment d'aluminates de calcium selon l'invention à cette température, à partir du degré d'hydratation des première et deuxième phases minéralogiques cristallisées CA2, C2AS à une température donnée.

A l'inverse des première et deuxième phases minéralogiques CA2, C2AS, la troisième phase minéralogique CA est connue pour être très réactive à température ambiante lorsqu'elle est en présence d'eau, c'est pourquoi sa fraction massique dans l'aluminate de calcium du ciment selon l'invention est maintenue inférieure ou égale à 20% de manière à conserver les caractéristiques de longue ouvrabilité du ciment selon l'invention.

La quatrième phase minéralogique CA6 est, quant à elle, complètement inerte quelle que soit la température à laquelle elle est soumise, ambiante ou élevée. Ainsi, elle ne s'hydrate pas même lors d'une élévation de température.

En revanche, lorsqu'elle est présente dans l'aluminate de calcium, elle contribue significativement au coût élevé de production dudit aluminate de calcium car elle contient beaucoup d'alumine qui est la partie la plus coûteuse dudit aluminate de calcium. C'est pourquoi sa fraction massique dans l'aluminate de calcium du ciment selon l'invention est maintenue inférieure ou égale à 20%.

Ainsi, de façon très avantageuse, le ciment selon l'invention comprenant peu de ces troisième et quatrième phases CA, CA6 réagit lentement lorsqu'il est mélangé à de l'eau à température ambiante, sans avoir besoin d'ajouter de retardateur, et il est avantageux d'un point de vue économique.

Par exemple, un ciment d'aluminates de calcium selon l'invention particulièrement intéressant, comprend, en masse par rapport à la masse totale dudit aluminate de calcium :
- 50% à 60% de première phase minéralogique cristallisée CA2 ;
- 26% à 32% de deuxième phase minéralogique cristallisée C2AS ;
- 2,5% à 3,5% de troisième phase minéralogique cristallisée CA ;
- 0,5% à 1,5% d'une cinquième phase minéralogique cristallisée de ferro-aluminate tétracalcique C4AF ;
- 10% à 15% de phases minéralogiques cristallisées supplémentaires.

Ainsi, cette composition selon l'invention présente à la fois une majorité de première et deuxième phases minéralogiques cristallisées CA2, C2AS et une minorité de phases minéralogiques cristallisées CA, CA6.

Plus précisément, un exemple de ciment d'aluminate de calcium selon l'invention envisageable comprend exactement, en masse par rapport à la masse totale dudit aluminate de calcium :
- 55% de première phase minéralogique cristallisée CA2 ;
- 29% de deuxième phase minéralogique cristallisée C2AS ;
- 3% de troisième phase minéralogique cristallisée CA ;
- 1% d'une cinquième phase minéralogique cristallisée de ferro-aluminate tétracalcique C4AF ;
- 12% de phases minéralogiques cristallisées supplémentaires.

Les phases minéralogiques cristallisées supplémentaires comprennent notamment par exemple la phase Ye'elimite C4A3$. Cet exemple de ciment d'aluminate de calcium selon l'invention comprend par exemple, en masse par rapport à la masse totale dudit aluminate de calcium entre 0,5 et 12% de cette phase Ye'elimite C4A3$.

Plus précisément, dans l'exemple donné ci-dessus, le ciment d'aluminates de calcium comprend par exemple 4% de cette phase Ye'elimite, compris dans les 12% de phases minéralogiques cristallisées supplémentaires.

Sur le diagramme de la figure 2, on retrouve cette composition particulière au point I. Elle est très proche de la droite particulière D et paraît même appartenir à cette droite particulière D sur la figure 2.

Par ailleurs, pour fabriquer le ciment d'aluminates de calcium selon l'invention, un opérateur co-broie, c'est-à-dire mélange et broie en une seule opération, de la bauxite et du calcaire jusqu'à obtenir une poudre comprenant des particules dont le diamètre maximal est inférieur ou égal à 100 micromètres (µm).

L'opération de co-broyage peut être réalisée au moyen d'un broyeur à boulet ou de tout autre broyeur connu de l'homme du métier.

La poudre obtenue à l'issue de cette opération de co-broyage est ensuite granulée à l'eau, c'est-à-dire que les fines particules de poudre sont agglomérées grâce à l'eau pour former des granules de diamètre supérieur à celui de la poudre.

Ces granules sont ensuite introduites dans un creuset en alumine qui est lui-même introduit dans un four électrique. Le four électrique contenant le creuset est porté à une température de 1400°C selon une rampe de température de 600°C par heure. Lorsque le four électrique a atteint 1400°C, un palier de cuisson de 6 heures est appliqué.

En sortie du four électrique, les granules d'aluminate de calcium sont broyées finement de manière à former la poudre formant le ciment d'aluminates de calcium selon l'invention.

De façon avantageuse, la poudre de ciment d'aluminates de calcium selon l'invention présente une surface spécifique Blaine mesurée selon la norme NF-EN-196-6, comprise entre 2200 centimètres carré par gramme et 4500 centimètres carré par gramme.

De préférence, la surface spécifique Blaine du ciment d'aluminates de calcium selon l'invention est comprise entre 2900 et 3900 centimètres carré par gramme.

Plus la surface spécifique Blaine est élevée, plus les grains constituant la poudre sont fins.

En outre, avantageusement, le ciment selon l'invention présentant une telle surface spécifique Blaine est adapté lors de son mélange avec de l'eau, à avoir une surface de contact optimale avec cette eau.

En outre, le ciment selon l'invention présentant cette surface spécifique Blaine est adapté à être mélangé de façon homogène à une grande quantité d'eau, c'est-à-dire que le ciment est adapté à être dispersé dans une grande quantité d'eau de façon équivalente en tout point du mélange.

Autrement dit, même en présence d'une quantité importante d'eau, le ciment selon l'invention ne ressue pas.

Le ciment d'aluminates de calcium selon l'invention peut être mélangé à de l'eau pour former une composition cimentaire.

Plus précisément, la composition cimentaire selon l'invention peut comprendre d'autres composés que le ciment d'aluminates de calcium selon l'invention, tels que :
- des ajouts cimentaires choisis parmi : des cendres volantes et/ou un laitier granulé de haut-fourneau et/ou une farine de silice et/ou de la fumée de silice et/ou du métakaolin,
- des granulats de plus ou moins gros diamètres choisis parmi : du quartz et/ou du calcaire fin et/ou du sable, et
- des adjuvants de toute sorte connus de l'homme du métier, par exemple des fluidifiants ou des retardateurs de prise.

Ces listes d'autres composés éventuellement compris dans la composition cimentaire sont non limitatives.

Les cendres volantes correspondent aux cendres obtenues lors de la combustion à hautes pressions et températures du charbon pulvérisé.

On peut notamment ajouter des cendres volantes très fines dites cendres volantes pulvérisées (appelées « *pulverized Fuel Ash* » en anglais) ou des cendres volantes de dimensions plus grosses (appelées « Furnace Bottom Ash » en anglais). Les produits commerciaux EN4750"N" fly ash® de la société Scotash, ou class F bottom ash® de la société FlyAshDirect en sont des exemples.

Le tableau 1 ci-dessous donne les principales caractéristiques physico-chimiques de ces cendres volantes.

**Tableau 1**

| **Cendres Volantes** | **EN450"N" fly ash** | **Class F bottom ash** |
|---|---|---|
| **Société** | Scotash | FlyAshDirect |
| **Surface Spécifique Blaine (cm²/g)** | 3110 | 2000 |
| **d50 (µm)** | 14,0 | 23,1 |
| **Densité** | 2,27 | 2,49 |
| **LOI 1000°C (%)** | 4,8 | na |

La ligne LOI à savoir « *Loss on Ignition » en anglais,* ou Perte au feu en français, regroupe ici des éléments volatils.

Le laitier granulé de haut fourneau provient de la couche superficielle qui se forme lors de la fusion du fer dans les hauts fourneaux, ladite couche superficielle étant séparée du fer en fusion et refroidie ensuite sous la forme de granules pour former ledit laitier.

Le produit commercial Slag® de la société Ecocem en est un exemple.

Le tableau 2 ci-dessous donne les principales caractéristiques physico-chimiques de ce laitier.

**Tableau 2**

| **Laitier** | **Slag** |
|---|---|
| **Société** | Ecocem |
| **Surface Spécifique Blaine (cm²/g)** | 4500 |
| **d50 (µm)** | 12,7 |
| **Densité** | 2,93 |

La fumée de silice est un matériau pouzzolanique comprenant de la silice amorphe. Il s'agit généralement d'un produit secondaire de la production des alliages de silicium et/ou de ferrosilicium dans les fours à arc électrique. Elle peut prendre des aspects différents : on peut notamment la trouver sous forme de poudre très fine, ou de granules dures de quelques millimètres de diamètres.

Les produits commerciaux 971U® de la société Elkem et Dray Powder S® de la société Norchem en sont des exemples.

Le tableau 3 ci-dessous donne les principales caractéristiques physico-chimiques de ces fumées de silice.

**Tableau 3**

| **Fumée de silice** | **971U** | **Dry Powder S** |
|---|---|---|
| **Société** | Elkem | Norchem |
| **Surface Spécifique Blaine (cm²/g)** | 16400 | 1640 |
| **d50 (µm)** | 10,3 | ∼560 |
| **Densité** | 2,24 | 2,29 |

Le métakaolin est un silicate d'aluminium anhydre et faiblement cristallin produit par déshydroxylation du kaolin à hautes températures.

Le produit commercial Metasial V800® de la société Soka (Société Kaolinière Armoricaine) en est un exemple.

Le tableau 4 ci-dessous donne les principales caractéristiques physico-chimiques de ce métakaolin.

**Tableau 4**

| **Métakaolin** | **Metasial V800** |
|---|---|
| **Société** | Soka |
| **Surface spécifique Blaine (cm²/g)** | 14100 |
| **d50 (µm)** | 4,0 |
| **Densité** | 2,75 |

En pratique, la composition cimentaire peut par exemple comprendre :
- de 0% à 50% d'ajouts cimentaires, en masse par rapport à la masse sèche de la composition cimentaire, et/ou
- de 50% à 100% de ciment d'aluminates de calcium selon l'invention, en masse par rapport à la masse sèche de la composition cimentaire ;
la masse sèche de la composition cimentaire correspondant à la masse totale de l'ensemble des composés compris dans ladite composition cimentaire excepté l'eau.

Ainsi, la composition cimentaire peut par exemple comprendre 0%, 5%, 10%, 15%, 20%, 25%, 30%, 35%, 40%, 45% ou encore 50% d'ajouts cimentaires, en masse par rapport à la masse sèche de la composition cimentaire, et/ou 50%, 55%, 60%, 65%, 70%, 75%, 80%, 85%, 90%, 95% ou encore 100% de ciment d'aluminates de calcium selon l'invention, en masse par rapport à la masse sèche de la composition cimentaire.

Quels que soient les composés compris dans la composition cimentaire, le ciment d'aluminates de calcium présent réagit avec l'eau, c'est-à-dire qu'il se produit une réaction chimique, couramment appelée « hydratation », entre le ciment d'aluminates de calcium et l'eau, au cours de laquelle les molécules constituant les parties cristalline et/ou amorphe du ciment selon l'invention sont hydratées par l'eau, à savoir qu'elles passent en solution dans l'eau sous forme d'ions.

De façon classique, du fait de cette réaction chimique, la consistance de la composition cimentaire formée par le mélange entre l'eau et le ciment selon l'invention est susceptible d'évoluer au cours du temps.

Plus précisément, on peut repérer trois phases d'évolution de ladite composition cimentaire, ces trois phases constituant le « durcissement global » de la composition cimentaire :
- une première phase, dite phase d'épaississement, au cours de laquelle la viscosité de la composition cimentaire augmente lentement, sans empêcher sa mise en œuvre ;
- une deuxième phase, dite phase de prise ou phase de prise hydraulique, au cours de laquelle la composition cimentaire durcit rapidement ; et,
- une troisième phase, dite phase de durcissement final, au cours de laquelle la composition cimentaire continue à durcir plus lentement.

La durée de la phase d'épaississement peut varier d'un ciment à l'autre dans la mesure où elle dépend beaucoup de la réactivité du ciment utilisé.

Le temps ouvert correspond globalement à la durée de cette phase d'épaississement. Elle est de l'ordre de quelques heures en général.

En pratique, la durée de la phase d'épaississement peut varier de quelques minutes à quelques heures en fonction de l'application envisagée, du ciment et des adjuvants éventuellement ajoutés.

Dans le cas d'une application dans les puits de forage pétroliers, la phase d'épaississement dure généralement quelques heures.

La durée de la phase d'épaississement dépend également de paramètres extérieurs tels que la pression, la température, et la proportion relative entre l'eau et le ciment.

Durant la phase de prise hydraulique, la composition cimentaire passe rapidement d'un état liquide à un état solide, ces états étant définis au sens mécanique du terme, à savoir que l'état liquide est un état dans lequel la composition cimentaire se déforme de façon irréversible lorsqu'elle est soumise à une déformation, alors que l'état solide est un état dans lequel la composition cimentaire peut se déformer élastiquement lorsqu'elle est soumise à une déformation.

En pratique, on considère que la composition cimentaire a atteint son état solide lorsque, soumise au test de Vicat selon la norme ASTM C91 décrit plus loin dans la partie exemple, l'aiguille de Vicat est incapable de traverser entièrement la composition cimentaire. Au contraire, on considère que la composition cimentaire est dans son état liquide lorsque, soumise à ce même test de Vicat, l'aiguille de Vicat traverse entièrement la composition cimentaire.

Ainsi, à la fin de la phase de prise hydraulique, la composition cimentaire présente déjà un aspect durci, de sorte qu'elle peut être considérée comme un matériau final durci. Cependant, elle continue à durcir pendant la phase de durcissement final.

En pratique, ici, l'invention propose une utilisation du ciment d'aluminates de calcium selon l'invention, selon laquelle
a) on réalise une composition cimentaire en mélangeant ledit ciment d'aluminates de calcium avec de l'eau,
b) on met en place ladite composition cimentaire,
c) on chauffe ladite composition cimentaire à une température comprise entre 50°C et 300°C, de préférence entre 80°C et 280° C, de manière à favoriser la prise de la composition cimentaire.

A l'étape a), un utilisateur forme la composition cimentaire en mélangeant le ciment d'aluminates de calcium avec tous lesdits autres composés éventuellement compris dans la composition cimentaire, et avec l'eau.

Initialement, c'est-à-dire au moment où l'eau, le ciment et éventuellement lesdits autres composés sont mélangés, la consistance de la composition cimentaire formée est plus ou moins fluide en fonction de la masse d'eau qu'elle contient par rapport à la masse totale de ladite composition cimentaire.

La quantité d'eau ajoutée au ciment selon l'invention et auxdits éventuels autres composés dépend principalement de l'application à laquelle est destinée la composition cimentaire.

Par exemple, un utilisateur peut choisir de former une composition cimentaire sous forme d'une pâte assez peu fluide.

Selon une utilisation particulière du ciment d'aluminates de calcium selon l'invention, à l'étape a), l'utilisateur peut former une suspension aqueuse de ciment.

Plus précisément, dans le cas où la composition cimentaire est une suspension aqueuse exclusivement formée par de l'eau et le ciment selon l'invention, la fraction massique de l'eau dans ladite suspension aqueuse est comprise entre 15% et 45%.

La fraction massique de l'eau dans cette suspension aqueuse, comprise entre 15% et 45%, revient à un ratio eau/ciment compris entre 20% et 70%, ledit ratio étant le rapport entre la masse d'eau et la masse de ciment sèche formant la suspension aqueuse.

Dans le cas où la composition cimentaire est une suspension aqueuse et comprend de l'eau, le ciment d'aluminates de calcium selon l'invention et des ajouts cimentaires, la fraction massique de l'eau dans ladite suspension aqueuse est comprise entre 20% et 60%, par exemple égale à 29%, 31%, 33%, 37%, 52%, ou encore 55%.

La fraction massique de l'eau dans cette suspension aqueuse, comprise entre 20% et 60%, revient à un ratio eau / composés secs compris entre 25% et 150%, ledit ratio étant le rapport entre la masse d'eau et la masse sèche de composition cimentaire, comprenant le ciment et les ajouts cimentaires. Par exemple, le ratio eau / composés secs de la suspension aqueuse est égale à 41%, 48%, 60%, 80%, 110%, ou encore 120%.

Ces considérations générales sont connues de l'homme du métier et la proportion d'eau à ajouter au ciment et aux éventuels autres composés pour obtenir une composition cimentaire dont la consistance est adaptée à chaque type d'application ne sera pas détaillée plus avant ci-après.

A l'étape b), tant que la composition cimentaire est dans la phase d'épaississement, l'utilisateur peut mettre en place la composition cimentaire.

Par exemple, si la composition cimentaire se présente sous la forme d'une suspension aqueuse, l'utilisateur peut couler la composition cimentaire dans une fente.

En particulier, selon l'utilisation particulière du ciment d'aluminates de calcium selon l'invention sous forme de suspension aqueuse, à l'étape b), ladite suspension aqueuse est injectée dans un puits de forage pétrolier.

Cette injection se fait au moyen d'une ou de plusieurs pompes qui poussent la suspension aqueuse dans un corps tubulaire jusqu'au fond du puits de forage. Une fois arrivée au fond du puits de forage, cette suspension peut remonter naturellement vers la surface, entre la paroi rocheuse et le corps tubulaire.

Lorsque la composition cimentaire se trouve sous la forme d'une pâte, l'utilisateur peut la mettre en forme de manière à préfabriquer des objets de type poutre ou dalle.

A l'étape c), le déclenchement de la phase de prise hydraulique de la composition cimentaire est favorisé par un chauffage de la composition cimentaire à une température comprise entre 50°C et 300°C, depréférence entre 80°C et 280 °C.

Plus précisément, ce chauffage de la composition cimentaire peut être volontaire ou subi.

Ainsi, en pratique, selon l'utilisation particulière de la composition cimentaire sous forme de suspension aqueuse pour les puits de forage pétrolier, cette suspension aqueuse de ciment est naturellement chauffée entre 50°C et 300°C par la roche environnante, après sa remontéevers la surface.

Par exemple, à une profondeur située entre 3000m et 5000m sous la surface, la température est généralement comprise entre 120°C et 180°C, et le chauffage de la composition cimentaire est alors subi.

Ainsi, avantageusement, selon l'utilisation particulière du ciment d'aluminates de calcium selon l'invention, la suspension aqueuse présente une ouvrabilité satisfaisante à température ambiante, c'est-à-dire que sa viscosité à température ambiante est suffisamment faible pour permettre son injection au moyen de pompes, et le durcissement de ladite suspension aqueuse se produit après son injection dans le puits, lorsque la température environnante s'élève.

De façon avantageuse, il n'y a pas besoin d'ajouter de retardateur à la suspension aqueuse ainsi formée.

L'utilisateur peut également choisir d'activer le phénomène de prise hydraulique de la composition cimentaire selon l'invention en chauffant ladite composition cimentaire à une température choisie entre 50°C et 300°C. Il s'agit alors d'un chauffage volontaire.

Avantageusement, l'utilisateur peut ainsi choisir le moment auquel est déclenchée la phase de prise hydraulique, en choisissant le moment auquel il chauffe la composition cimentaire.

Que le chauffage soit volontaire ou subi, la phase d'épaississement, correspondant globalement au temps ouvert, s'achève au moment de ce chauffage.

### Exemples

Dans la partie qui suit, des exemples ont été mis œuvre pour évaluer les propriétés du ciment d'aluminates de calcium selon l'invention, et les comparer à celles d'autres ciments existants.

Pour ce faire, différentes compositions cimentaires ont été formées à partir de différents ciments d'aluminates de calcium, dont le ciment selon l'invention, et ces compositions cimentaires ont été caractérisées à l'aide de plusieurs tests.

Deux aspects principaux permettent de caractériser une composition cimentaire : son ouvrabilité qui traduit le temps ouvert pendant lequel la composition cimentaire présente une viscosité adaptée à son utilisation, et sa cinétique de durcissement.

La cinétique de durcissement reflète à la fois la vitesse d'épaississement de la composition cimentaire, l'instant à partir duquel sa prise hydraulique est initiée, et la résistance mécanique atteinte par le matériau final durci obtenu à partir de la composition cimentaire après que celle-ci a réagi avec l'eau ajoutée disponible, à l'échéance souhaitée en fonction de l'application.

Les caractéristiques d'ouvrabilité et de cinétique de durcissement peuvent être quantifiées de différentes manières, par différentes méthodes de test et en fonction de différentes normes. Ainsi, ces caractéristiques d'ouvrabilité et de cinétique de durcissement peuvent être quantifiées par différents temps caractéristiques mesurés, par exemple un temps de gel, un temps de prise initial ou un temps d'épaississement, tels que définis ci-après.

Bien entendu, en fonction des utilisations visées pour les compositions cimentaires, l'ouvrabilité et la cinétique de durcissement recherchées peuvent varier.

### I. Essais préliminaires

### 1/ Ciments comparés

En pratique, ici, un premier, un deuxième, et un troisième ciment d'aluminates de calcium (Ciment1, Ciment2, Ciment3) ont été utilisés pour former différentes compositions cimentaires dont les propriétés ont été comparées.

Plus précisément, les premier et deuxième ciments (Ciment1, Ciment2) sont des ciments d'aluminates de calcium de l'art antérieur connus sous les dénominations commerciales de Ciment fondu® et SECAR®71.

Le troisième ciment (Ciment3) est un ciment d'aluminates de calcium selon l'invention.

Il est obtenu selon le procédé industriel décrit plus haut, en co-broyant 63,5% de Bauxite et 36,5% de Calcaire, en masse par rapport à la masse totale des matières co-broyées.

Le tableau « Composition » ci-dessous présente la composition chimique mesurée de ce troisième ciment selon l'invention Ciment3, ainsi que la composition chimique des matières premières utilisées pour l'obtenir (Bauxite et Calcaire). Ces compositions sont données en pourcentage massique (%), c'est-à-dire qu'elles indiquent la masse de composé par rapport à la masse totale sèche de ciment ou de matière première utilisée.

**Tableau « Composition »**

| | **Ciment3** | **Bauxite** | **Calcaire** |
|---|---|---|---|
| **SiO2 (%)** | 7,02 | 7,67 | 0,30 |
| **Al2O3 (%)** | 58,90 | 77,59 | 0,20 |
| **Fe2O3 (%)** | 2,85 | 2,30 | 0,08 |
| **CaO (%)** | 26,62 | 3,69 | 55,52 |
| **MgO (%)** | 0,52 | 0,39 | 0,28 |
| **SO3 (%)** | 0,20 | 0,16 | 0,03 |
| **K2O (%)** | 0,55 | 0,91 | 0,02 |
| **Na2O (%)** | 0,07 | 0,16 | 0,00 |
| **TiO2 (%)** | 2,78 | 3,72 | 0,00 |
| **P2O5 (%)** | 0,17 | 0,15 | 0,00 |
| **Mn2O3 (%)** | 0,01 | 0,02 | 0,00 |
| **Cr2O3 (%)** | 0,03 | 0,08 | 0,00 |
| **LOI (%)** | 0,28 | 2,78 | 43,54 |

La ligne LOI à savoir Loss on Ignition, ou Perte au feu, regroupe ici les éléments volatils tels que l'humidité résiduelle dans le cas de la bauxite ou le dioxyde de carbone CO2 dans le cas du calcaire.

Le tableau 5 ci-dessous donne les phases minéralogiques contenues dans ces premier, deuxième et troisième ciments (Ciment1, Ciment2, Ciment3). Les phases minéralogiques ont été mesurées par une technique connue de diffraction de rayons X (souvent abrégée DRX).

**Tableau 5 :**

| | **CA** | **CA2** | **C2AS** | **C2S** | **Ferrites** | **Autres** |
|---|---|---|---|---|---|---|
| **Ciment 1** | 55 % | na | 3 % | 9 % | 11 % | 22 % |
| **Ciment 2** | 60 % | 40 % | na | na | na | na |
| **Ciment 3** | 3 % | 55 % | 29 % | na | 1 % | 12 % |

La notation *na* signifie que le ciment ne comprend pas la phase minéralogique correspondante ou que ces phases sont présentes en quantités très faibles non mesurées.

La phase minéralogique Ferrites comprend essentiellement la phase minéralogique de Ferro-aluminate tétra-calcique C4AF, appelée dans la suite sixième phase minéralogique cristallisée. La maille cristalline de cette sixième phase minéralogique cristallisée comprend quatre molécules de chaux C pour une molécule d'alumine A et un oxyde de fer Fe₂O₃, abrégé par la lettre F.

La colonne « autres » regroupe les impuretés comprises dans ces ciments, à savoir au moins un des composés suivant : oxyde de fer Fe₂O₃, oxyde de titane TiO₂, oxyde de soufre SO₃, oxyde de magnésium MgO, et des composés alcalins.

Notamment, la colonne « Autres » du ciment Ciment1 de l'art antérieur comprend les phases minéralogiques CA6 et C4A3$. Plus précisément, le ciment Ciment1 comprend 0% de phase CA6 et environ 0,7% de C4A3$, en masse par rapport à la masse totale de l'ensemble des phases contenues dans ledit Ciment1.

Le ciment Ciment3 comprend 3% de phase CA6 et 4% de phase C4A3$, en masse par rapport à la masse totale de l'ensemble des phases minéralogiques contenues dans ledit Ciment3.

Compte tenu de la fabrication industrielle de ce troisième ciment d'aluminate de calcium selon l'invention, la proportion des phases minéralogiques qu'il comprend peut varier légèrement d'une campagne de fabrication à une autre.

Ainsi, un autre ciment selon l'invention Ciment3bis présentant les proportions de phases minéralogiques décrites dans le tableau 6 a également été obtenu dans des conditions similaires aux conditions d'obtention du troisième ciment selon l'invention Ciment3.

**Tableau 6**

| | |
|---|---|
| **CA2 (%)*** | **59.2** |
| **C2AS (%)*** | **22.5** |
| CT ortho. (%) | 4.6 |
| CA6 (%) | 5.4 |
| CA (%) | 0.9 |
| Spinel MA (%) | 1.2 |
| **C4A3S$ (%)** | **4.2** |
| C4AF (%) | 0.6 |
| Fer spinel (%) | 0.7 |
| Alu α (%) | 0.5 |
| C12A7 (%) | 0.0 |
| MgO (%) | 0.2 |
| CaO (%) | 0.2 |

Cet autre ciment d'aluminate de calcium selon l'invention, comprend ainsi 72,5 % de phases minéralogique CA2 et 27,5 % de phase minéralogique C2AS, en masse par rapport aux seules deux phases minéralogiques CA2, C2AS.

Un ciment de référence (CimentRéf) a également été utilisé en comparaison des premier, deuxième et troisième ciments d'aluminates de calcium Ciment1, Ciment2, Ciment3.

Ce ciment de référence CimentRéf est un ciment Portland de classe G classiquement connu de l'homme du métier et souvent utilisé dans des applications de type forage pétrolier.

Le ciment de référence CimentRéf présente une surface spécifique Blaine de l'ordre de 3010 cm²/g.

### 2/ Temps d'épaississement

Un premier test ayant permis de caractériser les ciments étudiés a consisté à mesurer le temps d'épaississement de différentes compositions cimentaires obtenues en mélangeant ces ciments avec de l'eau.

Le temps d'épaississement est une donnée permettant d'apprécier l'ouvrabilité de la composition cimentaire, en particulier lorsqu'elle se présente sous forme d'une suspension aqueuse.

Au sens où on l'entend ici, le temps d'épaississement est une estimation de la durée au bout de laquelle la composition cimentaire ne peut plus être pompée. Autrement dit, il s'agit de la durée au bout de laquelle une suspension aqueuse est trop visqueuse pour pouvoir être déplacée au moyen d'une pompe.

Plus précisément, le temps d'épaississement correspond à la durée qui s'est écoulée entre le moment où l'eau et le ciment ont été mélangés pour former la composition cimentaire sous forme de suspension aqueuse, et le moment où la consistance, dite consistance Bearden (Bc), de la composition cimentaire a atteint une valeur telle que cette composition cimentaire ne peut plus être pompée, la consistance Bearden étant exprimée au moyen d'une grandeur sans unité.

Ici, la mesure du temps d'épaississement se fait selon la norme ISO 10426-1, clause 10.3, issue du document « *Petroleum and natural gas industries* - *Cement and materials for well cementing »,* dont la première partie NF-EN-ISO-10426-1 est intitulée « Part 1 - Spécifications » et basée sur la norme ISO 10426-1:2005, et le temps d'épaississement est tel que la composition cimentaire a atteint une consistance Bearden de 100 Bc, à 23 ° C, sous pression atmosphérique de 1 atmosphère (atm).

En pratique, la mesure de ce temps d'épaississement s'effectue par exemple au moyen d'une pale de brassage adaptée à tourner dans la composition cimentaire tout en mesurant un couple. Ce couple mesuré permet d'apprécier la force que la pale doit exercer sur la composition cimentaire pour pouvoir tourner. Ce couple est ainsi relié à la consistance Bearden de la composition cimentaire.

Le tableau 7 ci-dessous présente différentes compositions cimentaires qui ont été formées à partir des trois ciments d'aluminates de calcium Ciment1, Ciment2, Ciment3, et du ciment Portland CimentRéf, ainsi que le temps d'épaississement qui leur est associé, à température ambiante (23°C).

En pratique, ces compositions cimentaires ont été formées à 23°C, en mélangeant le ciment avec la quantité d'eau appropriée (indiquée dans le tableau 7) pendant 15 secondes sous agitation à 4000 tours par minute. Une agitation supplémentaire à 12 000 tours par minute pendant 35 secondes a ensuite été effectuée.

Dans ce tableau 7, le ratio eau/ciment représente la masse d'eau qui a été introduite pour former la composition cimentaire, par rapport à la masse de ciment sèche.

**Tableau 7 :**

| **Nom de la composition cimentaire** | **Ciment utilisé** | **Ratio eau/ciment** | **Temps d'épaississement (heures : minutes)** |
|---|---|---|---|
| **Compo1** | Ciment1 | 0,5 | 1 : 21 |
| **Compo2** | Ciment2 | 0,5 | 0 : 48 |
| **Compo3** | Ciment3 | 0,38 | 10 : 26 |
| **CompoRéf** | CimentRéf | 0,44 | 5 : 38 |

Dans le tableau 7, on peut voir que les compositions cimentaires Compo1 et Compo2 formées à partir des ciments d'aluminates de calcium de l'art antérieur Ciment1 et Ciment2 présentent des temps d'épaississement relativement courts (inférieurs à 2 heures) à température ambiante (23°C). Si l'utilisateur a besoin d'un temps supérieur à ces temps d'épaississement pour pouvoir utiliser les compositions cimentaires comprenant les deux ciments Ciment1 et Ciment2, il devra leur ajouter des retardateurs de prise.

La composition cimentaire CompoRéf comprenant le CimentRéf confirme que les ciments Portland présentent un temps d'épaississement moyen (autour de 5 heures) à température ambiante (23°C). C'est pouquoi ces ciments sont souvent utilisés dans les applications nécessitant un temps de mise en œuvre assez long.

La composition cimentaire Compo3 comprenant le ciment d'aluminate de calcium selon l'invention Ciment3 présente un temps d'épaississement supérieur à 10 heures, ce qui offre la possibilité à l'utilisateur d'utiliser - par exemple de transporter, de couler, d'injecter, de pomper, etc. - cette composition cimentaire Compo3 pendant un temps long, et ce sans avoir à y ajouter de retardateur.

En outre, elle présente un temps d'épaississement près de deux fois supérieur à celui de la composition cimentaire CompoRéf à température ambiante (23°C), alors même qu'elle comprend moins d'eau et devrait donc être plus réactive que la composition cimentaire CompoRéf.

Le ciment selon l'invention Ciment3 présente donc une ouvrabilité très grande sans ajout de retardateur de prise. Ainsi, il convient particulièrement aux applications nécessitant un temps ouvert très long, et cela sans pollution chimique liée à l'utilisation de retardateurs de prise.

### 3/ Viscosité

Un deuxième test ayant permis de caractériser les ciments étudiés a consisté à mesurer la viscosité de certaines compositions cimentaires.

### 3a. Viscosimètre Fann®35

La viscosité permet d'apprécier la cinétique de durcissement et l'ouvrabilité de ces compositions cimentaires.

Il s'agit ici de mesurer la rhéologie des compositions cimentaires, c'est-à-dire leur aptitude à s'écouler et/ou à se déformer.

Au sens où on l'entend ici, la mesure de la viscosité se fait selon la norme ISO 10426-2, clause 12. Cette norme provient de la deuxième partie du « Petroleum and natural gas industries - Cement and materials for well cementing », ladite partie étant intitulée « Part 2 - Testing of well cements » et basée sur la publication API RP 10B, 22ème édition, de décembre 1997, addendum 1, d'octobre 1999.

Plus précisément, la mise en œuvre du test de viscosité se fait comme suit : le ciment est mélangé à la quantité choisie d'eau pour former la composition cimentaire (mode opératoire détaillé ci-dessus), puis cette composition cimentaire est placée dans un viscosimètre rotatif de la marque FANN®, modèle 35.

Le viscosimètre rotatif FANN®35 est dit « à indication directe ». En pratique, deux cylindres coaxiaux sont plongés verticalement dans la composition cimentaire. Le cylindre - aussi appelé manchon - extérieur est entrainé en rotation par un moteur à une vitesse choisie par l'opérateur. Le manchon intérieur est lié au bâti par un ressort de torsion. La composition cimentaire, mise en mouvement par le cylindre extérieur, exerce un couple sur le manchon intérieur, et ce couple est proportionnel à l'angle de torsion dudit ressort.

La lecture directe de l'angle de torsion du ressort (en degré) est liée à la contrainte de cisaillement (en Pascal) de la composition cimentaire, qui traduit la viscosité de ladite composition cimentaire. Cette mesure est communément appelée « mesure FANN®35 » *(FANN®35 reading*).

En pratique, le cylindre extérieur tourne à une vitesse de rotation choisie par l'opérateur avec un potentiomètre, allant de 3 à 300 tours par minute, et un réticule permet de mesurer visuellement sur un disque gradué l'angle de rotation du ressort lié au manchon intérieur, cet angle de torsion étant proportionnel au couple généré par la composition cimentaire en mouvement sur le manchon intérieur.

Il est alors possible de suivre l'évolution de l'angle de torsion du ressort lié au manchon intérieur, en fonction de la vitesse de rotation du cylindre extérieur.

Il est en outre possible de tester ponctuellement la composition cimentaire pour estimer sa viscosité directement après le mélange entre le ciment et l'eau (Viscosité initiale V1), ou après une période de repos de 10 minutes (Viscosité V2), à une température de 23°C, de 50°C ou de 80°C et à pression atmosphérique de 1 atmosphère (atm) environ, pour une vitesse de rotation du viscosimètre de 3 tours par minute (rpm).

En pratique, comme indiqué précédemment, les valeurs relevées sont celles de l'angle de torsion du ressort lié au manchon intérieur du viscosimètre Fann®35.

Le tableau 8 ci-dessous présente les différentes compositions cimentaires testées et donne des valeurs de l'angle de torsion du manchon intérieur représentatives de leur viscosité respective V1 et V2 à 23°C, le tableau 9 présente des compositions cimentaires similaires et des valeurs de l'angle de torsion du manchon intérieur représentatives de leur viscosité à 50°C, et le tableau 10 présente les mêmes compositions cimentaires que celles du tableau 9 et des valeurs de l'angle de torsion du manchon intérieur représentatives de leurs viscosités à 80 °C.

Dans ces trois tableaux 8, 9 et 10, les compositions cimentaires testées dépendent à la fois du ciment utilisé, de la surface spécifique Blaine choisie pour le ciment, et du ratio eau/ciment choisi.

Les valeurs indiquées pour les viscosités V1 et V2 sont ici les valeurs de l'angle de torsion mesurées.

**Tableau 8**

| **Composition cimentaire** | **Ciment utilisé** | **Ratio eau/ ciment** | **Surface Spécifique Blaine (cm².g⁻¹)** | **Viscosité initiale V1** | **Viscosité V2** |
|---|---|---|---|---|---|
| **Compo5** | Ciment2 | 0,41 | 4000 | 14 | >300 |
| **Compo6** | Ciment3 | 0,41 | 2200 | 6 | 21 |
| **Compo7** | Ciment3 | 0,41 | 3080 | 10 | 37 |
| **Compo8** | Ciment3 | 0,41 | 3470 | 13 | 38 |
| **Compo9** | Ciment3 | 0,41 | 3700 | 14 | 36 |
| **Compo10** | Ciment3 | 0,41 | 4100 | 18 | 58 |

Ainsi, la composition cimentaire Compo5 comprenant le ciment d'aluminate de calcium de l'art antérieur Ciment2 présente une viscosité initiale V1 acceptable pour pouvoir être manipulée, c'est-à-dire pour une mise en place par exemple par pompage, mais sa viscosité après 10 minutes est celle d'une composition cimentaire gélifiée. Par conséquent, dès que la composition cimentaire Compo5 est laissée immobile trop longtemps, elle ne peut plus être manipulée. Cela est particulièrement gênant lorsqu'on souhaite déplacer une telle composition cimentaire au moyen de pompes, qui risqueraient alors d'être endommagées au redémarrage après un arrêt temporaire.

En revanche, les compositions cimentaires selon l'invention Compo6 à Compo10 sont particulièrement avantageuses dans la mesure où leurs viscosités initiale V1 sont faibles (inférieures à 20), ce qui facilite leur transport au moyen de pompe. Leur viscosité V2 après un temps de pause reste également suffisamment faible pour que l'on puisse les pomper.

Ainsi, la cinétique de durcissement des compositions cimentaires comprenant le ciment d'aluminates de calcium selon l'invention Ciment3 est bien plus lente, à température ambiante, que celles des compositions cimentaires de l'art antérieur, ce qui est un avantage pour des utilisations nécessitant une longue manipulation.

En outre, le tableau 8 donne également une indication de la réactivité du ciment d'aluminates de calcium Ciment3 selon l'invention en fonction de la surface spécifique Blaine. On remarque en effet que plus la surface spécifique Blaine augmente, plus la viscosité initiale et la viscosité après pause augmentent. Ainsi, la cinétique de durcissement accélère lorsque la surface spécifique Blaine augmente, ce qui traduit le fait que les grains de poudre les plus fins sont plus facilement hydratés par l'eau car ils présentent une plus grande surface réactive.

**Tableau 9**

| **Composition cimentaire** | **Ciment utilisé** | **Ratio Eau / ciment** | **Surface Spécifique Blaine (cm².g⁻¹)** | **Viscosité initiale V1** | **Viscosité V2** |
|---|---|---|---|---|---|
| Compo11 | Ciment2 | 0,48 | 4000 | 24 | >300 |
| Compo12 | Ciment3 | 0,48 | 3470 | 13 | 67 |
| Compo13 | Ciment3 | 0,48 | 4100 | 20 | 121 |
| Compo14 | Ciment3 | 0,48 | 4400 | 27 | 145 |

En comparant les tableaux 8 et 9, on constate que la viscosité initiale de la composition cimentaire Compo11 du tableau 9 comprenant le ciment d'aluminates de calcium de l'art antérieur Ciment2 augmente lorsque la température augmente, alors même qu'elle comprend plus d'eau que la composition cimentaire similaire Compo5 du tableau 8.

En outre, comme dans le cas de la composition cimentaire Compo5, la viscosité V2 après pause de la composition cimentaire Compo11 est également trop importante pour que cette composition cimentaire Compo11 puisse être utilisée dans des pompes sans lui ajouter de retardateur de prise.

Par ailleurs, les compositions cimentaires selon l'invention Compo12 à Compo14 présentent des viscosités initiales V1 faibles et des viscosités V2 après un temps de pause permettant encore leur utilisation ainsi que leur transport au moyen de pompes.

En outre, à cette température (50°C), la surface spécifique Blaine joue un rôle important sur la viscosité : plus la surface spécifique Blaine augmente, plus la viscosité augmente.

**Tableau 10**

| **Composition cimentaire** | **Viscosité initiale V1** | **Viscosité V2** |
|---|---|---|
| Compo11 | >300 | >300 |
| Compo12 | 7 | 138 |
| Compo13 | 14 | 195 |
| Compo14 | 28 | 270 |

Le tableau 10 montre qu'à 80°C, la composition cimentaire Compo11 comprenant le ciment d'aluminate de calcium de l'art antérieur Ciment2 ne peut pas être utilisée car sa viscosité est trop importante dès le mélange avec l'eau.

La viscosité initiale V1 des compositions cimentaires comprenant le ciment selon l'invention Ciment3 à 80°C est du même ordre de grandeur qu'à 50 °C.

Par contre, l'élévation de température influence la viscosité V2 après un temps de pause des compositions cimentaires Compo12 à Compo14. En effet, la viscosité après pause augmente nettement entre 50°C et 80°C, et d'autant plus si la surface spécifique Blaine est grande. Cela confirme le fait que la température favorise la réaction entre l'eau et le ciment selon l'invention Ciment3.

### 3b. Viscosimètre Anton Paar

Par ailleurs, d'autres mesures de viscosité peuvent être effectuée avec un viscosimètre (ou rhéomètre) Anton Paar.

En pratique, le rhéomètre Anton Paar utilisé est référencé MCR_302®. Il est muni d'une coupe CC27 et d'une hélice de mélange à 6 pales rectangulaires droites de 16 millimètres (mm) de hauteur sur 9 mm de longueur, autour d'un axe de 4 mm de diamètre.

Le viscosimètre Anton Paar permet de suivre l'évolution de la viscosité en fonction du temps, à une température donnée, lorsque la pale tourne à une vitesse choisie.

Pour ce faire, le rhéomètre mesure en réalité le couple appliqué par la composition cimentaire sur la pale en rotation dans ladite composition cimentaire.

Le couple mesuré est représentatif de la viscosité de la composition cimentaire.

Ici, on a suivi l'évolution de ce couple en fonction du temps, à 80°C, lorsque la pale impose un taux de cisaillement de 500 s⁻¹.

Grâce à la courbe obtenue, il est possible de remonter au début de la prise, à savoir au temps dit « de gel » correspondant au lieu du changement de pente de la courbe représentant le couple en fonction du temps.

Le tableau 11 suivant présente en parallèle la viscosité mesurée par le viscosimètre Fann®35 après 10 minutes de repos (V2), et le temps de gel des deux compositions cimentaires selon l'invention comprenant le ciment Ciment3bis, et de la composition cimentaire de l'art antérieur comprenant le ciment Portland CimentRef.

**Tableau 11**

| **Composition Cimentaire** | **Ciment utilisé** | **Ratio Eau / Ciment** | **Surface Spécifique Blaine (cm².g⁻¹)** | **Viscosité V2 (Fann®35, 23°C)** | **Temps de gel (minutes) (Anton Paar, 80 °C)** |
|---|---|---|---|---|---|
| **Compo15** | Ciment3bis | 0,41 | 3070 | 38 | 48 |
| **Compo16** | Ciment3bis | 0,48 | 3070 | 25 | 77 |
| **CompoRef** | CimentRef | 0,44 | 3010 | 30 | 90 |

Par ailleurs, les résultats expérimentaux montrent que les compositions cimentaires comprenant le ciment Ciment3bis selon l'invention sont moins visqueuses aux temps courts que celle comprenant le ciment Portland de référence.

En outre, les compositions cimentaires compo15 et compo16 selon l'invention montrent une prise nette et rapide comparativement à la composition CompoRef. La rupture de pente de la courbe expérimentale entre la phase d'épaississement et la phase de prise est alors très marquée.

Enfin, on notera que le temps de gel dépend du ratio eau/ciment appliqué au ciment selon l'invention.

### 4/ Mesure de ressuage

La mesure de ressuage consiste à déterminer la masse d'eau apparaissant à la surface d'une quantité donnée de suspension aqueuse, après immobilisation de cette suspension aqueuse pendant 2 heures.

L'eau apparaissant en surface est donnée en pourcentage (%), en masse par rapport à la masse d'eau totale ajoutée à la suspension aqueuse.

Pour que la suspension aqueuse soit acceptée du point de vue des standards du « American Petroleum Institute (API) », le pourcentage maximum d'eau ressuée autorisé est de 5,9%.

En pratique, la mesure de ressuage est ici effectuée à 23°C, dans un récipient cylindrique de 250 millilitres (ml) de contenance.

Le tableau 12 suivant donne les pourcentages d'eau ressuée des trois compositions Compo15, Compo16 et CompoRéf étudiée précédemment.

**Tableau 12**

| **Composition Cimentaire** | **Ciment utilisé** | **Ratio Eau / Ciment** | **Surface Spécifique Blaine (cm².g⁻¹)** | **Eau ressuée (%)** |
|---|---|---|---|---|
| **Compo15** | Ciment3bis | 0,41 | 3070 | 1,0 |
| **Compo16** | Ciment3bis | 0,48 | 3070 | 2,8 |
| **CompoRef** | CimentRef | 0,44 | 3010 | 4,8 |

On remarque ici que le ciment selon l'invention ressue moins que le ciment de référence, même à des ratios eau/ciment supérieurs, ce qui est favorable pour assurer sa conformité aux standards API.

### 5/ Résistance mécanique

D'autre part, il est également possible d'apprécier la cinétique de durcissement des compositions cimentaires en mesurant la résistance mécanique atteinte par le matériau final durci obtenu après réaction entre l'eau et le ciment.

En pratique, on forme la composition cimentaire en mélangeant l'eau et le ciment, puis on laisse la composition cimentaire reposer pendant 24 heures, à une température choisie et une pression choisie, avant de mesurer la résistance mécanique selon la norme ISO 10426-1, clause 9.2.

Le tableau 13 présente les résistances mécaniques des trois compositions cimentaires Compo1, Compo2 et Compo3 après 24 heures à 37°C et sous pression atmosphérique (R1), après 24 heures à 60°C et sous pression atmosphérique (R2), et après 24 heures à 110°C et sous pression de 20,7 MégaPascal (R3).

Les résistances mécaniques R1, R2 et R3 sont données en MégaPascal (MPa).

**Tableau 13**

| **Composition cimentaire** | **Résistance mécanique R1 (MPa)** | **Résistance mécanique R2 (MPa)** | **Résistance mécanique R3 (MPa)** |
|---|---|---|---|
| Compo1 | 6,3 | 6,4 | 11,8 |
| Compo2 | 17,4 | 21,5 | 25,2 |
| Compo3 | 0 | 0,8 | 23,6 |

Dès 37°C, la résistance mécanique développée par les compositions cimentaires Compo1 et Compo2 comprenant les ciments d'aluminates de calcium selon l'art antérieur Ciment1 et Ciment2 est importante, ce qui confirme le fait que ces compositions cimentaires Compo1 et Compo2 réagissent à faible température.

Au contraire, la composition cimentaire Compo3 comprenant le ciment selon l'invention Ciment3 présente une résistance mécanique nulle à 37°C, et quasi-nulle à 60°C, ce qui indique que ce ciment n'est que très peu réactif en dessous de 60°C. Ainsi, cela conforte le fait que la réaction du ciment selon l'invention avec l'eau est naturellement retardée à des températures inférieures à 60°C, sans avoir besoin d'y ajouter de retardateur.

Après 24 heures à 110°C, les résistances mécaniques des compositions cimentaires Compo1 et Compo2 sont plus élevées, ce qui prouve que ces compositions cimentaires réagissent plus rapidement à cette température qu'à une température de 37°C.

A 110°C, la composition cimentaire Compo3 développe également une résistance mécanique de l'ordre d'une vingtaine de mégaPascals. Ainsi, la réaction entre le ciment selon l'invention et l'eau est favorisée par des hautes températures.

Par conséquent, le ciment d'aluminates de calcium selon l'invention présente une cinétique de durcissement naturellement contrôlée par la température, sans avoir besoin d'ajouter de retardateur.

En outre, à 110°C, la résistance mécanique R3 dévebppée par la composition cimentaire Compo3 comprenant le ciment d'aluminates de calcium selon l'invention Ciment3 est similaire à celle des ciments d'aluminates de calcium usuellement utilisés et connus à ce jour (de l'ordre de 20 MPa).

Elle est donc adaptée à des applications similaires.

### 6/ Temps de prise et contamination

### 6a. Test avec Aiguille de Vicat

Un autre test a porté sur l'effet de la contamination d'un ciment Portland par un ciment selon l'invention.

A cet effet, on a mesuré le temps de prise de différentes compositions cimentaires comprenant à la fois un ciment Portland et un ciment d'aluminates de calcium.

Au sens où on l'entend ici, le temps de prise est mesuré selon la norme ASTM C91, à l'aide d'une aiguille de Vicat.

Le test de Vicat consiste à mélanger l'eau et le ciment pour former la composition cimentaire, puis à laisser tomber une aiguille de Vicat dans la composition cimentaire, qui est statique, à intervalle de temps régulier. Tant que l'aiguille s'enfonce jusqu'au fond de la composition cimentaire, on considère que le temps de prise n'est pas atteint, dès qu'elle s'enfonce sans pouvoir aller jusqu'au fond de la composition cimentaire, on a atteint le temps de prise.

En pratique, le temps de prise correspond donc à la durée qui s'est écoulée entre le moment où le ciment et l'eau ont été mélangés pour former la composition cimentaire dans un état liquide, et le moment où la composition cimentaire est passée dans un état suffisamment solide pour que l'aiguille de Vicat ne puisse plus la traverser entièrement mais seulement partiellement, à une température de 23°C et sous pression atmosphérique(latm).

Le tableau 14 ci-dessous présente les temps de prise, en minutes, de différentes compositions cimentaires comprenant une certaine proportion de ciment d'aluminates de calcium mélangée à un ciment Portland. Le ciment Portland utilisé est un ciment Portland de classe H.

Dans ce tableau 14, les pourcentages donnent la masse de ciment d'aluminates de calcium ajoutée par rapport à la masse totale sèche de ciment utilisé. Ainsi, le complément pour atteindre 100% correspond à la masse de ciment Portland contenue dans la masse totale sèche de ciment.

Le ratio eau/ciment est de 0,38, c'est-à-dire que la masse d'eau utilisée représente 38% de la masse totale sèche de ciment utilisé.

**Tableau 14**

| **Ciment d'aluminates de calcium utilisé** | **0%** | **5%** | **8%** | **15%** |
|---|---|---|---|---|
| **Ciment1** | 400 | 310 | 220 | 20 |
| **Ciment2** | 400 | 190 | 45 | 10 |
| **Ciment3** | 400 | 340 | 320 | 300 |

Le tableau 14 présente l'effet sur le temps de prise de la contamination d'un ciment Portland par un ciment d'aluminates de calcium.

D'après le tableau 14, les ciments d'aluminates de calcium de l'art antérieur Ciment1 et Ciment2 ont un effet conséquent sur le temps de prise du ciment Portland utilisé. En effet, alors que le ciment Portland seul, correspondant à la première colonne, présente un temps de prise relativement long de 400 minutes, le temps de prise observé pour un mélange avec 15% de ciment d'aluminates de calcium Ciment1 et Ciment2 est très court (20 et 10 minutes respectivement). Cela signifie qu'une composition cimentaire contenant un ciment Portland et un ciment d'aluminates de calcium de l'art antérieur réagit de façon ultra rapide, empêchant l'utilisation d'une telle composition cimentaire pour des applications nécessitant des mises en œuvre longues. De telles compositions cimentaires ne peuvent donc pas être utilisées dans des applications de type puits de forage par exemple.

En revanche, la contamination du ciment Portland par le ciment selon l'invention Ciment3 n'a que peu d'effet, à température ambiante, sur le temps de prise de la composition cimentaire. En effet, le temps de prise d'une composition cimentaire comprenant 15% de Ciment3 et 85% de ciment Portland correspond à 75% du temps de prise d'une composition cimentaire comprenant 100% de ciment Portland.

Par conséquent, l'utilisation du ciment d'aluminates de calcium selon l'invention Ciment3 est facilitée par rapport aux autres ciments d'aluminates de calcium dans la mesure où il n'est pas nécessaire de nettoyer parfaitement les installations avant de pouvoir utiliser ces installations pour un ciment Portland.

### 6b. Test par rhéomètre Anton Paar

Par ailleurs, d'autres tests ont permis de mesurer l'effet de la contamination d'un ciment Portland par un ciment selon l'invention, ou de la contamination d'un ciment selon l'invention par un ciment Portland.

Ces tests ont consisté à suivre le couple exercé par les compositions cimentaires sur la pale du rhéomètre Anton Paar tournant à une vitesse de cisaillement constante de 500 s⁻¹, en fonction du temps, à 20°C ou à 80°C.

La courbe obtenue permet de déduire le temps de gel (comme cela est expliqué au point 3b. Viscosimètre Anton Paar ci-dessus).

La courbe obtenue permet également de déterminer la durée s'écoulant entre la formation de la composition cimentaire et le moment où le couple atteint 4mN.m.

Cette durée permet de quantifier le « temps de prise » de la composition cimentaire. Il s'agit d'une valeur de ce temps de prise qui n'est pas forcément égale à la valeur de temps de prise mesurée par le test de Vicat.

Pour cette mesure, les compositions cimentaires sont préparées comme suit : on mélange 100g de ciment avec 44 g d'eau (soit un ratio eau/ciment de 0,44), à l'aide d'un malaxeur Rayneri Turbotest, pendant 15 secondes à 1000 tours par minute, puis pendant 120 secondes à 3300 tours par minute.

Le tableau 15 ci-dessous présente les résultats obtenus.

**Tableau 15**

| **Ciments utilisés** | | | **Temps mesurés à 20°C** | |
|---|---|---|---|---|
| **CimentRéf** | **Ciment3bis** | **Ciment2** | **20°C** | |
| **(%)** | **(%)** | **(%)** | **gel (min)** | **prise (min)** |
| 0 | 100 | 0 | 420 | 420 |
| 10 | 90 | 0 | 420 | 420 |
| 25 | 75 | 0 | 190 | 260 |
| 90 | 10 | 0 | 420 | 420 |
| 90 | 0 | 10 | 10 | 10 |
| 100 | 0 | 0 | 420 | 420 |

Dans ce tableau 15, les pourcentages sont donnés en masse par rapport à la masse totale de ciment.

Lorsque la valeur des temps de gel et/ou de prise est de 420 minutes, cela signifie que l'expérience a été arrêtée avant que le matériau n'ait subi une gélification ou une prise. Dans ces cas, les temps de gel et de prise sont en réalité bien supérieurs à 420 minutes.

On remarque que lorsque le ciment Portland CimentRef est contaminé avec jusqu'à 10% de ciment selon l'invention Ciment3bis, à 20°C, les temps de gel et prise ne sont pas affectés, c'est-à-dire qu'ils sont similaires à ceux obtenus pour le ciment Portland CimentRéf seul.

En revanche, lorsque le ciment Portland est pollué avec 10 % du ciment de l'art antérieur Ciment2 à 20°C, les temps de prise et de gel chutent drastiquement : ils sont tous les deux de 10 minutes.

Par ailleurs, lorsque le ciment selon l'invention Ciment3bis est pollué avec jusqu'à 10% de Ciment Portland CimentRef à 20°C, les temps de gel et de prise ne sont pas affectés, c'est-à-dire qu'ils sont similaires à ceux obtenus pour le ciment Ciment3bis seul.

Lorsque le ciment selon l'invention Ciment3bis est pollué avec 25% de ciment Portland CimentRef, les temps de gel et de prise restent satisfaisants : ils sont respectivement de l'ordre de 190 minutes et 260 minutes.

Ainsi, l'utilisation du ciment d'aluminate de calcium selon l'invention est facilitée à température ambiante par rapport aux ciments de l'art antérieur dans la mesure où il n'est pas nécessaire de nettoyer les installations après ou avant d'utiliser ces installations avec du ciment Portland.

### 7/ Degré d'hydratation

Un dernier test a consisté à évaluer l'influence de la température sur le degré d'hydratation du ciment selon l'invention Ciment3.

Ce test se base sur des observations au microscope électronique à balayage permettant une analyse chimique élémentaire ainsi que sur des mesures de diffractions aux rayons X permettant une quantification des phases minéralogiques selon la méthode Rietveld.

En pratique, une composition cimentaire Compo15 a été formée en mélangeant de l'eau avec le ciment selon l'invention Ciment3 dans un ratio eau/ciment de 0,44, c'est-à-dire de sorte que l'eau représente 44% en masse par rapport à la masse totale sèche de ciment.

On a également formé une composition cimentaire Compo16 en mélangeant de l'eau avec le ciment de l'art antérieur Ciment2 dans un ratio eau/ciment de 0,44.

Ces compositions cimentaires Compo15 et Compo16 ont ensuite été soumises à un test de diffraction aux rayons X dès qu'elles ont été formées (D1), après une cure, c'est-à-dire un repos à 23°C pendant 24 heures (D2), après un passage à l'autoclave pendant 24 heures à 120°C (D3), et après un passage à l'autoclave pendant 24 heures à 180°C (D4).

Les résultats de ce test de diffraction aux rayons X permettent d'estimer le pourcentage de chaque phase minéralogique présente dans les compositions cimentaires Compo15 et Compo16 ainsi que l'eau libre restante, en masse par rapport à la masse totale de la composition cimentaire Compo15, en fonction du traitement qu'elles ont subi.

Les résultats permettent également d'estimer le pourcentage d'hydrates formés pendant la réaction d'hydratation de l'eau avec les ciments Ciment3 et Ciment2, en fonction des différents traitements subis. Les hydrates sont des composés formés entre l'eau (notée H) et les composés chimiques hydratés issus des phases minéralogiques comprises initialement dans les ciments étudiés.

Autrement dit, les résultats du test de diffraction aux rayons X permettent d'estimer le degré d'hydratation des phases minéralogiques du ciment selon l'invention Ciment3 ou du ciment de l'art antérieur Ciment2, en fonction de la température.

On entend par « eau libre », l'eau qui n'est pas engagée dans des liaisons avec des ions provenant des différentes phases minéralogiques hydratées, c'est-à-dire qui n'appartient pas déjà à un hydrate formé. Autrement dit, il s'agit de l'eau encore disponible pour réagir avec (ou hydrater) les phases minéralogiques anhydres encore existantes.

Dans les tableaux 16 et 17, la phase « autres » regroupe les impuretés éventuelles (oxyde de fer Fe₂O₃, oxyde de titane TiO₂, oxyde de soufre SO₃, oxyde de magnésium MgO, et des composés alcalins).

Le tableau 16 ci-dessous présente les résultats du test de diffraction aux rayons X, à savoir le pourcentage de chaque phase minéralogique et de chaque hydrate présent après chaque traitement subi par la composition cimentaire Compo15.

Le tableau 17 présente quant à lui les résultats du test de diffraction aux rayons X, après chaque traitement subi par la composition cimentaire Compo16.

**Tableau 16**

| **Phases** | **D1** | **D2** | **D3** | **D4** |
|---|---|---|---|---|
| **CA2** | 39 % | 36 % | 0% | 0% |
| **C2AS** | 20 % | 20 % | 14% | 11% |
| **Autres** | 10 % | 8 % | 8% | 8% |
| **Eau libre** | 31 % | 26 % | 16% | 19% |
| **CAH10** | 0% | 6% | 0% | 0% |
| **C3AH6 Katoite** | 0% | 0% | 27% | 22% |
| **C3AS(3-x)H4x Hibshite** | 0% | 0% | 0% | 7% |
| **AH3 Gibbsite** | 0% | 4% | 14% | 0% |
| **AH Boehmite** | 0% | 0% | 21% | 33% |

Dans ce tableau 16, la phase « autres » comprend également la phase CA. Cette phase CA est présente initialement lors du mélange entre le ciment3 et l'eau (colonne D1), et est absente du mélange après 24 heures de réaction (colonnes D2, D3 et D4) car elle a totalement réagi avec l'eau, quelle que soit la température.

La ligne « Autres » comprend en outre la phase CA6. Ici, la phase CA6 représente 2,3%, en masse, de l'ensemble des phases comprises dans la composition Compo15 au moment de la diffraction D1, 2,6% en masse, de l'ensemble des phases comprises dans cette composition au moment de la diffraction D2, 2,2% en masse, de l'ensemble des phases comprises dans cette composition au moment de la diffraction D3 et 2% en masse de l'ensemble des phases comprises dans cette composition au moment de la diffraction D4.

Comme le montre le tableau 16, les première et deuxième phases minéralogiques CA2, C2AS réagissent peu, voire pas, en dessous de 120°C.

Par contre, la première phase minéralogique CA2 réagit entièrement dès 120°C. Autrement dit, à partir de 120°C, la premièe phase minéralogique CA2 est entièrement hydratée par l'eau.

La deuxième phase minéralogique C2AS réagit à partir de 120°C, mais elle est moins réactive que la première phase minéralogique CA2.

Ainsi, la réactivité de la première phase minéralogique CA2 est favorisée par une température inférieure à celle favorisant la réactivité de la deuxième phase minéralogique C2AS.

Le CA6 ne réagit pas quelle que soit la température, les variations de composition étant attribuées aux incertitudes inhérentes à la méthode de mesure.

**Tableau 17**

| **Phases** | **D1** | **D3** | **D4** |
|---|---|---|---|
| **CA** | 40 % | 0% | 0% |
| **CA2** | 27% | 0% | 0% |
| **Autres** | 2% | 0% | 0% |
| **Eau libre** | 31 % | 2% | 11 % |
| **C3AH6 Katoite** | 0% | 45% | 44% |
| **AH3 Gibbsite** | 0% | 41% | 0% |
| **AH Boehmite** | 0% | 12% | 45 % |

En comparant les tableaux 16 et 17, on remarque que les hydrates C3AH6, AH3, et AH formés par la réaction d'hydratation du ciment d'aluminate de calcium de l'art antérieur Ciment2 avec l'eau sont également formés par la réaction d'hydratation du ciment d'aluminates de calcium selon l'invention Ciment3 avec l'eau.

En outre, lors de la réaction d'hydratation du ciment d'aluminates de calcium selon l'invention Ciment3 avec l'eau, un hydrate supplémentaire C3AS₍₃₋ₓ₎H₄ₓ est également formé.

Ainsi, la présence des mêmes hydrates dans le matériau final durci obtenu à partir du ciment d'aluminates de calcium de l'art antérieur Ciment2 et dans le matériau final durci obtenu à partir du ciment d'aluminates de calcium selon l'invention Ciment3 montre que les propriétés de résistance chimique de ces matériaux finaux durcis sont similaires.

Par conséquent, le ciment selon l'invention présente des propriétés de résistance chimique similaires à celles des ciments d'aluminates de calcium déjà connus.

Ainsi, l'ensemble des expériences effectuées montrent que le ciment d'aluminates de calcium selon l'invention présente une cinétique de durcissement lente à température ambiante, ce qui permet de l'utiliser sans retardateur de prise.

Cette cinétique de durcissement peut être ajustée en fonction de la température et en choisissant la proportion relative de première et de deuxième phase minéralogique CA2, C2AS.

En outre, à température ambiante, le ciment d'aluminates de calcium selon l'invention présente un faible pouvoir contaminant sur les ciments Portland.

Enfin, les propriétés mécaniques du matériau final durci obtenu à partir du ciment d'aluminates de calcium selon l'invention sont semblables à celles des matériaux finaux durcis obtenus à partir des ciments d'aluminates de calcium connus.

### 8/ Masse volumique de la composition cimentaire

Dans le cas des applications aux forages pétroliers, la masse volumique détermine la capacité de la composition cimentaire utilisée dans les puits de forage pétroliers à retenir les gaz et le pétrole contenus dans lesdits puits.

La masse volumique est évaluée en rapportant la masse de la suspension aqueuse à son volume.

En pratique, on mesure ici la masse de 250 ml de suspension aqueuse.

La masse volumique est exprimée en « pounds per gallon (ppg) », sachant que 1 ppg vaut 0,12 kilogramme par décimètre cube (kg/dm³) ou encore 0,12 gramme par centimètre cube (g/cm³).

Le tableau 18 suivant présente la densité propre des compositions cimentaires comportant le Ciment3bis selon l'invention et le ciment Portland CimentRef.

**Tableau 18**

| **Composition cimentaire** | **Ciment utilisé** | **Ratio eau / ciment** | **Surface Spécifique Blaine (cm²/g)** | **Masse volumique (ppg)** |
|---|---|---|---|---|
| **Compo15** | Ciment3bis | 0,41 | 3070 | 16,0 |
| **Compo16** | Ciment3bis | 0,48 | 3070 | 15,3 |
| **CompoRéf** | CimentRéf | 0,44 | 3010 | 15,8 |

Ainsi, on remarque que les masses volumiques des compositions cimentaires Compo15 etCompo16 selon l'invention sont similaires à celle du ciment Portland de référence et donc adaptées aux applications dans les forages pétroliers.

### II. Essais complémentaires

### 1/ Ciments comparés

Un quatrième, un cinquième et un sixième ciment d'aluminates de calcium selon l'invention (Ciment4, Ciment5, Ciment6) ont été utilisés pour former différentes compositions cimentaires dont les propriétés ont été comparées.

Les quatrième, cinquième et sixième ciments Ciment4, Ciment5, Ciment6 sont obtenus en laboratoire à partir des matières premières pratiquement pures suivantes : la source de silice Millisil E400®, la source d'alumine AL170® et la source de calcaire Calcite Normapu®. Les compositions précises de ces matières premières sont données dans le tableau 19 ci-dessous.

En pratique, les ciments Ciment4, Ciment5 et Ciment6 sont obtenus selon le mode opératoire suivant :
- Pesée des matières premières ;
- Co-broyage des matières premières au tourne-jarre, dans une cuve de 6 litres, de la marque Linatex, pendant environ 16h, jusqu'à obtenir une poudre comprenant des particules dont le diamètre maximal est inférieur ou égal à 100 micromètres (µm) ;
- Granulation à l'eau selon une technique connue de l'homme du métier dite de « granulation à l'assiette » pour obtenir des granules de 1 cm à 3 cm de diamètre environ ;

- Etuvage de ces granules à 110° C, pendant au moins 15h ;
- Cuisson dans un creuset en alumine introduit dans un four électrique ;
- Concassage ;
- Broyage fin au broyeur à boulets en acier de modèle BB10® pour obtenir une surface spécifique Blaine proche de 3000 cm²/g.

Afin d'atteindre la température de cuisson souhaitée, la rampe de température appliquée est de 600°C par heure.

Le tableau 19 suivant résume les conditions opératoires et les masses de matières premières mélangées pour former les ciments Ciment4, Ciment5 et Ciment6.

**Tableau 19**

| | **Ciment4** | | **Ciment5** | | **Ciment6** | |
|---|---|---|---|---|---|---|
| **Alumine Al170** | 720,0g | | 500,0g | | 662,0g | |
| **Silice E400** | 35,0g | | 150,0g | | 63,0g | |
| **Calcaire Normapur** | 429,8g | | 614,0g | | 480,7g | |
| **Cuisson (Durée en heures et température en degré Celsius)** | 12h | 1550°C | 16h | 1525°C | 16h | 1525°C |
| **Nombre de tours lors du broyage fin** | 7500 | | 9000 | | 8000 | |

Le tableau 20 ci-après donne la composition chimique des matières premières utilisées pour obtenir les ciments de laboratoire Ciment4, Ciment5, Ciment6, ainsi que la composition des ciments Ciment4, Ciment5 et Ciment6 effectivement obtenus.

**Tableau 20**

| | **Source de silice Millisil E400** | **Source d'alumine Al170** | **Source de calcaire CaCO₃** | **Ciment4** | **Ciment5** | **Ciment6** |
|---|---|---|---|---|---|---|
| **PaF (%)** | 0,29 | 0,63 | 43,93 | na | na | na |
| **SiO₂(%)** | 98,51 | na | 0,06 | 3,4 | 15,1 | 6,2 |
| **Al₂O₃(%)** | na | 99,17 | 0,1 | 72,3 | 50,6 | 66,5 |
| **Fe₂O₃ (%)** | 0,06 | 0,03 | 0,14 | 1,1 | 0,2 | 0,7 |
| **CaO (%)** | 0,02 | 0,02 | 55,32 | 24,3 | 34,9 | 27,2 |
| **MgO (%)** | na | 0,01 | na | na | na | na |
| **SO₃ (%)** | 0,08 | 0,07 | 0,05 | 0,1 | 0,1 | 0,1 |
| **K₂O (%)** | na | na | na | na | na | na |
| **Na₂O (%)** | 0,08 | 0,05 | na | 0,1 | 0,1 | 0 |
| **TiO₂ (%)** | 0,03 | 0,02 | 0,02 | na | na | na |
| **P₂O₅ (%)** | 0,01 | 0,01 | na | na | na | na |
| **Mn₂O₃ (%)** | 0,01 | 0,01 | 0,01 | na | na | na |
| **Cr₂O₃ (%)** | 0,02 | 0,01 | 0,02 | na | na | na |

Le tableau 21 ci-dessous donne les phases minéralogiques contenues dans les quatrième, cinquième et sixième ciments (Ciment4, Ciment5, Ciment6).

**Tableau 21**

| | **Ciment4** | **Ciment5** | **Ciment6** |
|---|---|---|---|
| **CA (%)** | 0 | 0,1 | 0,4 |
| **CA6** | 0 | 0 | 0,4 |
| **CA2 (%)** | **84,8** | **32,6** | **70** |
| **C2AS (%)** | **15** | **66,9** | **28,8** |
| **C2S (%)** | 0 | 0 | 0 |
| **Ferrites (%)** | 0 | 0 | 0 |
| **C4A3$** | 0 | 0 | 0 |
| **Alumine (%)** | 0 | 0,3 | 0,1 |
| **Chaux (%)** | 0,1 | 0,2 | 0,1 |
| **Quartz (%)** | 0,1 | 0 | 0,2 |
| **Autres (%)** | 0 | 0 | 0 |

Les lignes « alumine » et « chaux » représentent les restes de matières premières n'ayant pas formé de phases minéralogiques.

Les ciments Ciment4, Ciment6 et Ciment5 sont respectivement représentés sur le diagramme de la figure 2 aux points J, K et L de la droite D.

Le tableau 22 suivant donne la surface spécifique Blaine, la densité et le diamètre d50 (µm) des ciments Ciment4, Ciment5, Ciment6 obtenus.

En pratique, la densité correspond à la masse volumique du ciment rapporté à la masse volumique de l'eau pure. La densité est mesurée au pycnomètre.

Le diamètre d50 correspond au diamètre médian d50 d'un ensemble quelconque de particules. C'est une grandeur représentative de la distribution statistique des tailles de ces particules, autrement dit de la granulométrie de cet ensemble de particules.

Le diamètre médian d50 est un diamètre de référence défini comme le diamètre en-dessous duquel se situe 50% des particules étudiées, en volume par rapport au volume total de l'ensemble desdites particules étudiées.

Autrement dit, pour un ensemble de particules présentant un diamètre médian d50 donné, 50% en volume de ces particules présente un diamètre inférieur à ce diamètre médian d50 donné, et 50% en masse de ces particules présente un diamètre supérieur à ce diamètre médian d50 donné.

On entend ici par « diamètre » la plus grande dimension de la particule, quelle que soit sa forme.

**Tableau 22**

| | **Surface Spécifique Blaine (cm²/g)** | **d50(µm)** | **Densité** |
|---|---|---|---|
| **Ciment4** | 3110 | 33 | 2,94 |
| **Ciment5** | 3690 | 16 | 3,00 |
| **Ciment6** | 3070 | 25 | 2,95 |

On a formé des compositions cimentaires à partir des ciments selon l'invention Ciment4, Ciment5 et Ciment6.

Ces compositions cimentaires ont été formées à 23°C en mélangeant 346 grammes de ciment avec 142 grammes d'eau (soit un ratio eau/ciment de 0,41) pendant 15 secondes sous agitation à 4000 tours par minute, puis pendant 35 secondes sous agitation à 12 000 tours par minute.

### 2/ Tests rhéologigues

Les tests rhéologiques ont été réalisés grâce à un viscosimètre Anton Paar.

Comme précédemment, le rhéomètre Anton Paar utilisé est référencé MCR_302®. Il est muni d'une coupe CC27 et de son hélice d'agitation à 6 pales rectangulaires droites de 16 millimètres (mm) de hauteur sur 9 mm de longueur autour d'un axe de 4 mm de diamètre.

L'évolution, en fonction du temps, du couple généré par les différentes compositions cimentaires sur la pale du viscosimètre exerçant une vitesse de cisaillement de 500 s⁻¹, à 80°C a été tracée.

Les trois compositions cimentaires comprenant chacune les ciments Ciment4, Ciment5 et Ciment6 présentent des temps de gel relativement courts : 7 minutes pour les compositions comprenant les ciments Ciment4 et Ciment6, et 9 minutes pour la composition comprenant le ciment Ciment5.L'évolution, en fonction du temps du couple généré par la composition cimentaire comprenant le ciment selon l'invention Ciment4 sur la pale du viscosimètre exerçant une vitesse de cisaillement de 500s⁻¹, a été tracée à 80°C et à 23° C.

A 23°C, la composition subit une gélification environ 30 minutes après le mélange entre l'eau et le ciment Ciment4. Cependant, à cette température, la composition ne subit pas de phase de prise dans les 8 heures de l'expérience.

Au contraire, à 80°C, la prise est relativement rapde : le temps de gel observé est de l'ordre de 7 minutes suivi d'une phase de prise.

Ainsi, la réactivité de la composition comprenant le ciment selon l'invention Ciment4 est augmentée par la température, puisque le temps de gel est plus court et la prise plus rapide.

### 3/ Ressuage

L'expérience de ressuage décrite précédemment a été reconduite sur les compositions cimentaires comprenant les ciments selon l'invention Ciment4, Ciment5, et Ciment6.

**Le tableau 23 suivant présente les résultats de cette expérience.**

| **Composition cimentaire** | **Ciment utilisé** | **Ratio eau/ciment** | **Surface Spécifique Blaine (cm²/g)** | **Eau ressuée (%)** |
|---|---|---|---|---|
| **Compo17** | Ciment4 | 0,41 | 3110 | 0 |
| **Compo18** | Ciment5 | 0,41 | 3690 | 0,4 |
| **Compo19** | Ciment6 | 0,41 | 3070 | 0,2 |

On remarque que les pourcentages d'eau ressuée sont très faibles et tout à fait satisfaisants pour répondre aux standards API.

### 4/ Masse volumique des compositions cimentaires

Comme expliqué au point I.8, on a mesuré la masse volumique des compositions cimentaires Compo17 à Compo19. Les résultats correspondants sont présentés dans le tableau 24 suivant.

**Tableau 24**

| **Composition cimentaire** | **Ciment utilisé** | **Ratio eau / ciment** | **Surface Spécifique Blaine (cm²/g)** | **Masse volumique (ppg)** |
|---|---|---|---|---|
| **Compo17** | Ciment4 | 0,41 | 3110 | 16,6 |
| **Compo18** | Ciment5 | 0,41 | 3690 | 16,4 |
| **Compo19** | Ciment6 | 0,41 | 3070 | 16,1 |

Ainsi, on remarque que les masses volumiques des compositions cimentaires Compo17 à Compo19 selon l'invention sont similaires à celle du ciment Portland de référence et donc adaptées aux applications dans les forages pétroliers.

### 5/ Hydratation et Résistance mécanique

### 5a. Test par ultrasons selon la norme API RP 10B-2

Il s'agit d'un test non destructif qui consiste à mesurer le temps de propagation des ultrasons à travers un échantillon de matériau cimentaire, ici à travers le coulis de départ, de dimension connue, en cours de prise et de durcissement.

D'une manière générale, plus le matériau durcit, plus le temps nécessaire aux ultrasons pour traverser ce matériau est court.

Ainsi, on peut suivre les étapes de structuration du matériau soumis à différentes conditions de température et de pression choisies.

Ce temps de propagation est ensuite comparé aux temps de propagation obtenus sur des éprouvettes standards dont la résistance mécanique est évaluée par des tests à la rupture classique.

Il est alors possible de déduire la valeur de la résistance mécanique du matériau, dite « résistance mécanique par ultrason », en la comparant aux mesures effectuées sur les éprouvettes standards.

Pour mettre en œuvre ce test, il convient dans un premier temps de fabriquer les compositions cimentaires.

En pratique, la fabrication des compositions cimentaires est similaire à celle indiquée dans la partie I.2 des exemples, ce qui correspond à une fabrication selon la norme API RP 10B-2 Clause 5.

Les compositions obtenues sont celles données dans les tableaux 23 et 24 ci-dessus.

La mesure des temps de propagation des ultra sons à travers l'échantillon est réalisée selon la norme API RP 10B-2 Clause 8, c'est-à-dire que l'eau et le ciment sont mélangés, la composition cimentaire est introduite dans la cellule de mesure où elle est placée sous une rampe de température allant de 26,6°C à 121 °C en 4 heures, puis sous une température constance de 121 °C pendant 20 heures, et où une pression de 3 000psi est appliquée dès l'introduction dans la cellule de mesure. La résistance mécanique par ultrason est évaluée pendant l'évolution du matériau par élévation de température et de pression.

Ici, les résistances mécaniques des différentes compositions cimentaires Compo15 et Compo17 à Compo19 sont mesurées 12 heures après le début du traitement thermique, soit après les 4 heures de rampe de température et les 8 premières heures du palier de température, et 24 heures après le début du traitement thermique, soit à la fin de traitement thermique comprenant les 4 heures de rampes de températures et les 20 heures du palier de température.

Les résistances mécaniques des compositions cimentaires sont les suivantes
- après 12 heures de traitement: 34 MégaPascals (MPa) pour la Compo17, 1,5 MPa pour la Compo18, 17 MPa pour la Compo19, et 16 MPa pour la Compo15 ;
- après 24 heures de traitement : 34 MPa pour la Compo17, 3 MPa pour la Compo18, 19 MPa pour la Compo19 et 21 MPa pour la Compo15.

Comme le montrent ces résultats, la composition Compol9 comprenant le Ciment6 fabriqué en laboratoire présente une résistance mécanique par ultrason comparable à celle de la composition Compo15 comprenant le Ciment3bis fabriqué industriellement, car ces ciments présentent une teneur équivalente en phase CA2 et C2AS.

Par ailleurs, on peut noter que la résistance mécanique par ultrason de la composition Compo14 comprenant le Ciment4 est nettement supérieure à la résistance mécanique de la composition Compol9 comprenant le Ciment6, elle-même nettement supérieure à la résistance mécanique de la composition Compo18 comprenant le Ciment5.

Par conséquent, on peut déduire que la résistance mécanique par ultrason augmente avec le ratio massique CA2/C2AS des ciments utilisés.

Cependant, la résistance mécanique de la composition Compo18 comprenant le Ciment5 est encore très faible, l'hydratation de la composition correspondante n'étant probablement pas encore assez avancée à l'instant de la mesure (24 heures).

### 5b. Test à l'autoclave

Les compositions cimentaires sont réalisées selon le même protocole que pour les tests au viscosimètre Anton Paar.

Les compositions cimentaires ont été introduites dans un moule comportant trois cellules cylindriques (diamètre 40 mm, hauteur 50 mm), puis placé dans l'autoclave régulé à 180°C avec une pression de 10 bars (145 PSI) générée par la pression de vapeur.

Après 24 heures de séjour dans l'autoclave, la résistance à la compression des compositions cimentaires est mesurée au moyen d'un module de presse. La vitesse de compression est de 2.4 kiloNewtons par seconde.

La composition Compo17 comprenant le ciment Ciment4 présente une résistance mécanique à la compression de 2113 PSI (14,6 MPa), celle comprenant le ciment Ciment5 (Compo18) de 561 PSI (3,9 MPa), et celle comprenant le ciment Ciment6 (Compo19) de 2330 PSI (16,0 MPa).

Alors qu'après une cure sous une température de 120°C, telle que subie lors du test réalisé par ultrasons décrit précédemment, la composition Compo18 comprenant le ciment Ciment5 selon l'invention développait une résistance mécanique par ultrason égale à 10% de celle de la composition Compo17 comprenant le ciment Ciment4, la résistance mécanique de cette même composition Compo18 comprenant le Ciment5 après un traitement à 180°C à l'autoclave est égale à 25% de celle comprenant le Ciment4 (Compo17).

Ainsi, plus la température est élevée, plus l'écart de résistance mécanique entre la composition cimentaire comprenant un ciment selon l'invention riche en C2AS et la composition cimentaire comprenant un ciment selon l'invention riche en CA2 a tendance à se réduire.

Les ciments selon l'invention sont destinés à des applications différentes pour lesquelles une résistance plus ou moins grande est recherchée, à un instant donné.

### III Effets de la phase minoritaire Ye'elimite C4A3$

### 1/ Ciments comparés

Par ailleurs, trois autres ciments Ciment7, Ciment8, Ciment9 ont également été fabriqués.

Il s'agit de ciments fabriqués en laboratoire et visant à reproduire les ciments obtenus industriellement par le procédé selon l'invention, lorsque les matières premières utilisées contiennent de l'oxyde de soufre SO₃, ou lorsque que de l'oxyde de soufre est introduit par le procédé industriel.

En pratique, les ciments Ciment7, Ciment8, Ciment9 sont obtenus à partir des matières premières suivantes : du calcaire, de la bauxite A, de la bauxite B et sulfate de calcium anhydre (abrégé C$), dont les compositions chimiques respectives sont indiquées dans le tableau 26 ci-après.

En pratique, 5kg de chacun des ciments Ciment7, Ciment8 et Ciment9 sont obtenus selon le mode opératoire suivant :
- Etuvage des matières premières à 110°C pendant 24 heures pour les assécher ;
- Co-broyage des matières premières dans un broyeur à boulets de laboratoire de type « Blue Circle », à 1500 tours, suivi de l'ouverture du broyeur pour nettoyer la trappe et d'un broyage supplémentaire pendant 400 tours supplémentaires.
- Granulation des matières premières à l'eau selon une technique connue de l'homme du métier dite de « granulation à l'assiette pour obtenir des granules de 5 mm à 20 mm de diamètre environ ;
- Etuvage des granules à 110° C pendant 24 heures pour les assécher ;
- Cuisson des granules dans trois creusets en alumine, dans un four de la marque Nabertherm® à 1375°C pendant 12 heures (une fois la température de 1.375°C atteinte) avec une rampe de montée en température de 10°C par minute ;
- Refroidissement par inertie dans le four ;
- Concassage du matériau obtenu pour former des grains de diamètre inférieur à 3,15 mm ;
- Broyage fin des grains obtenus dans le broyeur à boulets de type « Blue Circle » jusqu'à obtention d'une poudre de surface spécifique Blaine de 3000cm²/g environ.

Le tableau 25 suivant résume les conditions opératoires et les masses de matières premières mélangées pour former les ciments Ciment7, Ciment8 et Ciment9.

**Tableau 25**

| | **Ciment7** | **Ciment8** | **Ciment9** |
|---|---|---|---|
| **Calcaire (g)** | 34 | 34 | 33,4 |
| **Bauxite A (g)** | 58,6 | 58,6 | 58,2 |
| **Bauxite B (g)** | 7 | 6 | 6 |
| **Anhydrite C$ (g)** | 0,4 | 1,4 | 2,4 |
| **Cuisson (Durée en heures et température en degré Celsius)** | Un palier de 12 heures à 1375° C, avec une rampe de température de 600°C par heure. | | |

Le tableau 26 ci-après donne la composition chimique des matières premières utilisées pour obtenir les ciments Ciment7, Ciment8, Ciment9 ainsi que celle des ciments Ciment7, Ciment8, Ciment9 obtenus.

**Tableau 26**

| | **Calcaire** | **Bauxite A** | **Bauxite B** | **Ciment 7** | **Ciment 8** | **Ciment 9** |
|---|---|---|---|---|---|---|
| **SiO2 (%)** | 0,13 | 7,66 | 0,93 | 6,5 | 4,9 | 4,9 |
| **Al2O3 (%)** | 0,29 | 68,86 | 77,80 | 64,3 | 66,0 | 64,0 |
| **Fe2O3 (%)** | 0,10 | 2,36 | 0,61 | 0,4 | 0,4 | 0,5 |
| **CaO (%)** | 56,21 | 0,54 | 0,02 | 25,9 | 25,7 | 26,0 |
| **MgO (%)** | 0,11 | 0,27 | 0,08 | 0,2 | 0,4 | 0,4 |
| **SO3 (%)** | 0,05 | 0,12 | 0,07 | 0,2 | 0,6 | 1,1 |
| **K2O (%)** | 0,00 | 0,87 | 0,05 | na | na | na |
| **Na2O (%)** | 0,05 | 0,09 | 0,19 | na | na | na |
| **TiO2 (%)** | 0,02 | 3,57 | 4,45 | 2,4 | 3,0 | 2,9 |
| **P2O5 (%)** | 0,01 | 0,21 | 0,17 | na | na | na |
| **Mn2O3 (%)** | 0,01 | 0,03 | 0,01 | na | na | na |
| **Cr2O3 (%)** | 0,01 | 0,03 | 0,02 | na | na | na |
| **FeO** | na | na | na | 0,1 | 0,1 | 0,1 |
| **H2O** | na | na | na | 0 | 0 | 0 |
| **LOI (%)** | 43,02 | 15,39 | 15,61 | na | na | na |

Le tableau 27 ci-dessous donne les phases minéralogiques contenues dans les ciments Ciment7, Ciment8, Ciment9. Les phases minéralogiques ont été mesurées par une technique connue de diffraction aux rayons X (souvent abrégée DRX).

**Tableau 27**

| | **Ciment7** | **Ciment8** | **Ciment9** |
|---|---|---|---|
| **CA2** | **54** | **60** | **54** |
| **C2AS** | **30** | **23** | **22** |
| **CA6** | 9 | 7 | 8 |
| **CT ortho** | 4 | 5 | 5 |
| **C4A3$** | **1** | **4** | **8** |
| **MA** | 1 | 1 | 1 |
| **CA** | 0 | 0 | 0 |
| **Ferrite** | 1 | 0 | 1 |

La phase MA correspond à une phase comprenant une molécule d'oxyde de magnésium MgO (noté M selon la notation des cimentiers) pour une molécule d'alumine A.

Chacun des ciments Ciment7, Ciment8, Ciment9 comprend environ 70% de première phase minéralogique CA2 et 30% de deuxième phase minéralogique C2AS, par rapport à la masse totale de ces deux phases minéralogiques.

Ainsi, ils sont comparables, par leur composition en ces deux phases, aux ciments Ciment3, Ciment3bis et Ciment6 selon l'invention.

Comme on peut le voir dans le tableau 27, les ciments Ciment7, Ciment8 et Ciment9 comprennent diverses proportions de la phase minoritaire Ye'elimite C4A3$, à savoir respectivement 1%, 4% et 8% de phase minéralogique C4A3$, en masse par rapport à la masse totale du ciment d'aluminate de calcium, respectivement Ciment7, Ciment8 et Ciment9.

Ainsi, les proportions en phases minéralogiques du Ciment 8 le rendent assimilable aux ciments d'aluminate de calcium selon l'invention Ciment3 et Ciment3bis.

Le tableau 28 donne la surface spécifique Blaine et le diamètre d50 (µm) des ciments Ciment7, Ciment8 et Ciment9 obtenus

**Tableau 28**

| | **Surface Spécifique Blaine (cm²/g)** | **d50(µm)** |
|---|---|---|
| **Ciment7** | 2950 | 34 |
| **Ciment8** | 3000 | 28 |
| **Ciment9** | 3080 | 24 |

On a formé des compositions cimentaires à partir des ciments selon l'invention Ciment7, Ciment8 et Ciment9.

Ces compositions cimentaires ont été formées à 23°C, en mélangeant 346 grammes de ciment avec 152 grammes d'eau (soit un ratio eau/ciment de 0,44) pendant 15 secondes sous agitation à 4000 tours par minute, puis pendant 35 secondes sous agitation à 12 000 tours par minute.

### 2/ Tests rhéologiques

### 2a. Viscosimètre Fann®35

Comme précédemment expliqué dans la partie *I. Essais Préliminaires*, grâce au viscosimètre FANN®35, il est possible de suivre l'évolution du couple généré par la composition cimentaire sur le manchon intérieur, en fonction de la vitesse de rotation du cylindre extérieur, et de tester ponctuellement la composition cimentaire pour estimer sa viscosité directement après le mélange entre le ciment et l'eau (Viscosité initiale V1), ou après une période de repos de 10 minutes (Viscosité V2), à une température de 23°C.

Le tableau 29 présente les valeurs de l'angle de torsion du ressort de maintien lié au manchon intérieur représentatives de la viscosité V1 et V2 des compositions cimentaires comprenant les ciments Ciment7, Ciment8, Ciment9, ainsi que celles des compositions cimentaires comprenant le ciment Ciment3bis.

**Tableau 29**

| **Composition cimentaire** | **Ciment utilisé** | **Ratio eau / ciment** | **Surface Blaine (cm²/g)** | **Phase C4A3$ (%)** | **Viscosité V1** | **Viscosité V2** |
|---|---|---|---|---|---|---|
| **Compo15** | Ciment3 bis | 0,41 | 3070 | 4 | 17 | 38 |
| **Compo16** | Ciment3 bis | 0,48 | 3070 | 4 | 9 | 25 |
| **Compo20** | Ciment7 | 0,44 | 2950 | 1 | 13 | 32 |
| **Compo21** | Ciment8 | 0,44 | 3000 | 4 | 15 | 46 |
| **Compo22** | Ciment9 | 0,44 | 3080 | 8 | 17 | 58 |

Ainsi, comme le montre le tableau 29, les viscosités V1 et V2 des compositions cimentaires 20 à 22 comprenant les ciments Ciment7, Ciment8, Ciment9 sont satisfaisantes car elles permettent le pompage de ces compositions cimentaires à température ambiante.

A 23°C, les viscosités V1 et V2 sont légèrement impactées par le pourcentage de phase minoritaire Ye'elimite C4A3$ : les viscosités V1 et V2 augmentent avec l'augmentation de phase Ye'elimite.

Le tableau 30 suivant donne la viscosité des différentes compositions cimentaires Compo16 et Compo20 à Compo22, à 23°C, brsque le cylindre extérieur du rhéomètre tourne à 300 tours par minutes (en cours de montée) puis à 600 tours par minute.

**Tableau 30**

| **Composition cimentaire** | **Ciment utilisé** | **Ratio eau / ciment** | **Surface Blaine (cm²/g)** | **Phase C4A3$ (%)** | **Viscosité à 300 tours par minute** |
|---|---|---|---|---|---|
| **Compo16** | Ciment3 bis | 0,48 | 3070 | 4 | 62 |
| **Compo20** | Ciment7 | 0,44 | 2950 | 1 | 75 |
| **Compo21** | Ciment8 | 0,44 | 3000 | 4 | 100 |
| **Compo22** | Ciment9 | 0,44 | 3080 | 8 | 103 |

A nouveau, on peut noter qu'à 23°C, la viscosité sous forte contrainte est légèrement impactée par le pourcentage de phase minoritaire Ye'elimite C4A3$ : la viscosité augmente avec l'augmentation de phase Ye'elimite.

### 2b. Viscosimètre Anton Paar

Comme expliqué précédemment, le viscosimètre Anton Paar permet de suivre l'évolution de la viscosité en fonction du temps, à une température donnée, lorsque la pale tourne à une vitesse choisie.

Ici, l'hélice tourne à 500s⁻¹, et la température est de 80°C environ.

Grâce à la courbe obtenue, il est possible de remonter au début de la prise, à savoir au temps dit « de gel » correspondant au lieu du changement de pente de la courbe.

L'évolution en fonction du temps du couple généré par les compositions cimentaires Compo20 à Compo22 sur la pale du rhéomètre Anton Par, à 80°C a été mesurée.

L'effet de la phase minoritaire Ye'elimite C4A3$ est important à 80°C, tant sur le temps de gel (qui marque le début de la phase de prise), que sur la viscosité globale des compositions.

En effet, les temps de gel sont respectivement d'environ 30 minutes pour la composition Compo20 comprenant 1% de phaseC4A3$, 5 heures et 20 minutes pour la composition Compo21 comprenant 4% de phase C4A3$, et 6 heures et 30 minutes pour la composition Compo22 comprenant 8% de phase C4A3$.

Ainsi, de façon surprenante, plus la quantité de phase minoritaire Ye'elimite augmente dans la composition cimentaire, plus l'ouvrabilité est grande, c'est-à-dire plus le temps ouvert est long, ou encore plus la phase d'épaississement est longue.

En conséquence, il semble que la phase minoritaire C4A3$ a un effet retardant, à haute température, sur la prise des compositions cimentaires selon l'invention.

En outre, les contraintes en cisaillement à 500 s⁻¹(liées à la viscosité dynamique) des compositions cimentaires pendant la phase d'épaississement sont d'autant plus grandes que les compositions cimentaires comprennent plus de phase minoritaire C4A3$ : 150 Pa pour la Compo20, autour de 250 Pa pour la Compo21, et autour de 500 Pa pour la Compo22.

Ainsi, à 80°C, la viscosité dynamique des compositbns cimentaires pendant la phase d'épaississement semble être fortement impactée par l'augmentation de phase minoritaire Ye'elimite.

### 3/ Ressuage

L'expérience de ressuage décrite précédemment a été reconduite sur les compositions cimentaires comprenant les ciments selon l'invention Ciment7, Ciment8, et Ciment9.

Le tableau 31 présente les résultats de cette expérience.

**Tableau 31**

| **Composition cimentaire** | **Ciment utilisé** | **Ratio eau/ciment** | **Surface Spécifique Blaine (cm²/g)** | **Eau ressuée (%)** |
|---|---|---|---|---|
| **Compo20** | Ciment7 | 0,44 | 2950 | 0,3 |
| **Compo21** | Ciment8 | 0,44 | 3000 | 1,1 |
| **Compo22** | Ciment9 | 0,44 | 3080 | 0,7 |

On remarque que les pourcentages d'eau ressuée sont très faibles et tout à fait satisfaisants pour répondre aux standards API.

### 4/ Masse volumique

Comme expliqué au point I.8, on a mesuré la masse volumique des compositions cimentaires Compo20 à Compo22. Les résultats sont présentés dans le tableau 32 suivant.

**Tableau 32**

| **Composition cimentaire** | **Ciment utilisé** | **Ratio eau / ciment** | **Surface Spécifique Blaine (cm²/g)** | **Densité propre (ppg)** |
|---|---|---|---|---|
| **Compo20** | Ciment7 | 0,44 | 2950 | 15,8 |
| **Compo21** | Ciment8 | 0,44 | 3000 | 15,5 |
| **Compo22** | Ciment9 | 0,44 | 3080 | 15,6 |

Ainsi, on remarque que les masses volumiques des compositions cimentaires Compo20 à Compo22 selon l'invention sont adaptées à une application dans les forages pétroliers.

La présence de la phase minoritaire C4A3$ n'a donc pas d'impact sur la masse volumique des compositions cimentaires selon l'invention.

### 5/ Pollution croisée

Comme expliqué précédemment au point 1,6b, l'effet de la contamination d'un ciment Portland par un ciment selon l'invention, ou de la contamination d'un ciment selon l'invention par un ciment Portland a été évalué grâce au viscosimètre Anton Paar.

Pour rappel, on mesure le temps de gel correspondant au moment du changement de pente de la courbe (représentatif du passage de la phase d'épaississement à la phase de prise), et le temps de prise qui correspond à la durée s'écoulant entre la formation de la composition cimentaire et le moment où le couple atteint 4mN.m.

Pour cette mesure, les compositions cimentaires sont préparées comme suit : on mélange 100g de ciment avec 44 g d'eau (soit un ratio eau/ciment de 0,44), à l'aide d'un malaxeur Rayneri Turbotest, pendant 15 secondes à 1000 tours par minute, puis pendant 120 secondes à 3300 tours par minute.

Le tableau 33 ci-dessous présente les résultats obtenus.

**Tableau 33**

| **Ciments utilisés** | | | **Phase C4A3$ dans le mélange Ciment3bis + CSA** | **Temps mesurés** | |
|---|---|---|---|---|---|
| **CimentRef** | **Ciment3bis** | **CSA** | | **20°C** | |
| **(%)** | **(%)** | **(%)** | **(%)** | **Gel (min)** | **Set (min)** |
| 25 | 69 | 6 | 8% | 240 | 280 |
| 25 | 75 | 0 | 4% | 190 | 260 |

Le ciment CSA correspond à un ciment de sulfoaluminate de calcium classique se trouvant dans le commerce.

Il s'agit par exemple du ciment KTS 100 commercialisé par la société Polar Bear, ayant une surface spécifique Blaine de 4900 cm²/g. Ce ciment commercial comprend environ 55% de phase C4A3$, en masse par rapport à la masse totale de ciment.

L'ajout du ciment de sulfoaluminate de calcium permet d'introduire une quantité donnée de phase C4A3$ dans la composition cimentaire et d'évaluer l'effet de cette phase sur la pollution d'un ciment Portland par un ciment selon l'invention et inversement.

Ici, le mélange de ciment Ciment3bis selon l'invention et de ciment CSA comprend environ 8% de phase C4A3$, en masse par rapport à la masse totale dudit mélange de ciment. Ce mélange de ciments subit une pollution par du ciment Portland à hauteur de 25% environ, ou vient polluer un ciment Portland, à hauteur de 25% environ.

Lorsque le mélange de ciment est pollué par du ciment Portland, on remarque que les temps de gel et de prise sont nettement allongés et passent de 190 minutes et 260 minutes à 240 minutes et 280 minutes.

Ainsi, l'augmentation de la phase minoritaire C4A3$ permet de diminuer encore l'effet de la pollution d'un ciment selon l'invention par un ciment Portland.

Ainsi, il n'est pas nécessaire de nettoyer les installations entre une utilisation d'un ciment selon l'invention et une utilisation d'un ciment Portland.

## Revendications

1. Ciment d'aluminates de calcium, comprenant un aluminate de calcium avec une première phase minéralogique cristallisée de dialuminate de calcium CA2 comportant un oxyde de calcium CaO pour deux oxydes d'aluminium Al₂O₃ et une deuxième phase minéralogique cristallisée de silicate d'alumine bicalcique C2AS comportant deux oxydes de calcium CaO pour un oxyde d'aluminium Al₂O₃ et un dioxyde de silicium SiO₂,
**caractérisé en ce que** la fraction massique de l'ensemble desdites première et deuxième phases minéralogiques dans ledit aluminate de calcium est supérieure ou égale à 80%.

2. Ciment d'aluminates de calcium selon la revendication 1, dans lequel ledit aluminate de calcium comprend également une partie amorphe, dont la fraction massique dans ledit aluminate de calcium est inférieure ou égale à 20%.

3. Ciment d'aluminates de calcium selon l'une des revendications 1 et 2, dans lequel ledit aluminate de calcium comprend en outre une troisième phase minéralogique cristallisée d'aluminate de monocalcium CA comportant un oxyde de calcium CaO pour un oxyde d'aluminium Al₂O₃ et/ou une quatrième phase minéralogique cristallisée d'hexa-aluminate de calcium CA6 comportant un oxyde de calcium CaO pour six oxydes d'aluminium Al₂O₃, la fraction massique de l'ensemble des troisième et quatrième phases minéralogiques dans ledit aluminate de calcium étant inférieure ou égale à 20%.

4. Ciment d'aluminates de calcium selon l'une des revendications 1 à 3, dans lequel ledit aluminate de calcium comprend en outre une phase minéralogique supplémentaire de sulfoaluminate de calcium C4A3$ comportant quatre oxydes de calcium CaO pour trois oxydes d'aluminium Al₂O₃ et un oxyde de soufre SO₃.

5. Ciment d'aluminates de calcium, selon l'une des revendications 1 à 4, comprenant, en masse par rapport à la masse totale dudit aluminate de calcium :
- 0% à 5 % d'un oxyde de fer Fe₂O₃,
- 0% à 5% d'un oxyde de titane TiO₂,
- 0% à 5% d'un oxyde de soufre SO₃,
- 0% à 5% d'un oxyde de magnésium MgO,
- 0% à 2% de composés alcalins.

6. Ciment d'aluminates de calcium selon l'une des revendications 1 à 5, se présentant sous la forme d'une poudre ayant une surface spécifique Blaine mesurée selon la norme NF-EN-196-6 comprise entre 2200 centimètres carrés par gramme et 4500 centimètres carrés par gramme, de préférence entre 2900 et 3900 centimètres carrés par gramme.

7. Ciment d'aluminates de calcium selon l'une des revendications 1 à 6, comprenant, en masse par rapport à la masse totale dudit aluminate de calcium :
- 50% à 60% de première phase minéralogique cristallisée CA2,
- 26% à 32% de deuxième phase minéralogique cristallisée C2AS,
- 2,5% à 3,5% de troisième phase minéralogique cristallisée CA,
- 0,5% à 1,5% d'une cinquième phase minéralogique cristallisée de ferro-aluminate tétracalcique C4AF,
- 10% à 15% de phases minéralogiques cristallisées supplémentaires.

8. Ciment d'aluminates de calcium selon l'une des revendications 1 à 7, comprenant 0,5% à 15% de phase minéralogique supplémentaire de sulfoaluminate de calcium C4A3$ en masse par rapport à la masse totale dudit aluminate de calcium.

9. Composition cimentaire comprenant au moins le ciment d'aluminates de calcium selon l'une des revendications 1 à 8 mélangé à de l'eau, et éventuellement des ajouts cimentaires tels que des cendres volantes et/ou un laitier granulé de haut-fourneau et/ou une farine de silice et/ou de la fumée de silice et/ou du métakaolin, des granulats tels que du quartz et/ou du calcaire fin et/ou du sable, et des adjuvants.

10. Utilisation du ciment d'aluminates de calcium selon l'une des revendications 1 à 8, selon laquelle :
a) on réalise une composition cimentaire en mélangeant au moins ledit ciment d'aluminates de calcium avec de l'eau,
b) on met en place ladite composition cimentaire,
c) on chauffe ladite composition cimentaire à une température comprise entre 50°C et 300°C, de préférence entre 80°C et 280°C, de manière à favoriser la prise de la composition cimentaire.

11. Utilisation du ciment d'aluminates de calcium selon la revendication 10, selon laquelle, à l'étape a), la composition cimentaire se présente sous la forme d'une suspension aqueuse, et selon laquelle à l'étape b), la composition cimentaire est placée dans un puits de forage pétrolier.

## Patentansprüche

1. Caiciumaluminatzement, umfassend ein Calciumaluminat mit einer ersten kristallisierten mineralogischen Phase aus Calciumdialuminat CA2, umfassend ein Calciumoxid CaO für zwei Aluminiumoxide Al₂O₃ und eine zweite kristallisierte mineralogische Phase aus Dicalciumaluminatsilicat C2AS, umfassend zwei Calciumoxide CaO für ein Aluminiumoxid Al₂O₃ und ein Siliziumdioxid SiO₂,
**dadurch gekennzeichnet, dass** der Massenanteil der ersten und zweiten mineralogischen Phase in dem Caiciumaluminat insgesamt größer oder gleich 80 % ist.

2. Calciumaluminatzement nach Anspruch 1, wobei das Calciumaluminat auch einen amorphen Teil umfasst, dessen Massenanteil in dem Calciumaluminat kleiner oder gleich 20 % ist.

3. Calciumaluminatzement nach einem der Ansprüche 1 und 2, wobei das Calciumaluminat ferner eine dritte kristallisierte mineralogische Phase aus Monocalciumaluminat CA umfasst, umfassend ein Calciumoxid CaO für ein Aluminiumoxid Al₂O₃ und/oder eine vierte kristallisierte mineralogische Phase aus Hexacalciumaluminat CA6, umfassend ein Calciumoxid CaO für sechs Aluminiumoxide Al₂O₃, wobei der Massenanteil der dritten und vierten mineralogischen Phase in dem Calciumaluminat insgesamt kleiner oder gleich 20 % ist.

4. Calciumaluminatzement nach einem der Ansprüche 1 bis 3, wobei das Calciumaluminat ferner eine zusätzliche mineralogische Phase aus Calciumsulfoaluminat C4A3$ umfasst, umfassend vier Calciumoxide CaO für drei Aluminiumoxide Al₂O₃ und ein Schwefeloxid SO₃.

5. Calciumaluminatzement nach einem der Ansprüche 1 bis 4, umfassend, bezogen auf die Gesamtmasse des Calciumaluminats:
- 0 Gew.-% bis 5 Gew.-% eines Eisenoxids Fe₂O₃,
- 0 Gew.-% bis 5 Gew.-% eines Titanoxids TiO₂,
- 0 Gew.-% bis 5 Gew.-% eines Schwefeloxids SO₃,
- 0 Gew.-% bis 5 Gew.-% eines Magnesiumoxids MgO,
- 0 Gew.-% bis 2 Gew.-% alkalische Verbindungen.

6. Calciumaluminatzement nach einem der Ansprüche 1 bis 5, der die Form eines Pulvers aufweist, das eine spezifische Oberfläche nach Blaine, gemessen gemäß der Norm NF-EN-196-6, aufweist, die zwischen 2.200 Quadratzentimetern pro Gramm und 4.500 Quadratzentimetern pro Gramm, vorzugsweise zwischen 2.900 und 3.900 Quadratzentimetern pro Gramm liegt.

7. Calciumaluminatzement nach einem der Ansprüche 1 bis 6, umfassend, bezogen auf die Gesamtmasse des Calciumaluminats:
- 50 Gew.-% bis 60 Gew.-% der ersten kristallisierten mineralogischen Phase CA2,
- 26 Gew.-% bis 32 Gew.-% der zweiten kristallisierten mineralogischen Phase C2AS,
- 2,5 Gew.-% bis 3,5 Gew.-% der dritten kristallisierten mineralogischen Phase CA,
- 0,5 Gew.-% bis 1,5 Gew.-% einer fünften mineralogischen kristallisierten Phase aus Calciumaluminatferrit C4AF,
- 10 Gew.-% bis 15 Gew.-% zusätzliche kristallisierte mineralogische Phasen.

8. Calciumaluminatzement nach einem der Ansprüche 1 bis 7, umfassend 0,5 Gew.-% bis 15 Gew.-% zusätzliche mineralogische Phase aus Calciumsulfoaluminat C4A3$, bezogen auf das Gesamtgewicht des Calciumaluminats.

9. Zementzusammensetzung, umfassend mindestens den Calciumaluminatzement nach einem der Ansprüche 1 bis 8, gemischt mit Wasser, und gegebenenfalls Zementzusätzen wie Flugasche und/oder Hüttensand und/oder ein Silikamehl und/oder Silikastaub und/oder Metakaolin, Zuschlagstoffe, wie Quarz und/oder feiner Kalkstein und/oder Sand und Hilfsstoffe.

10. Verwendung des Calciumaluminatzements nach einem der Ansprüche 1 bis 8, wobei:
a) eine Zementzusammensetzung hergestellt wird, indem mindestens der Calciumaluminatzement mit Wasser gemischt wird,
b) die Zementzusammensetzung eingebracht wird,
c) die Zementzusammensetzung auf eine Temperatur zwischen 50 °C und 300 °C, vorzugsweise zwischen 80 °C und 280 °C erhitzt wird, um das Abbinden der Zementzusammensetzung zu fördern.

11. Verwendung des Calciumaluminatzements nach Anspruch 10, wobei in Schritt a) die Zementzusammensetzung in Form einer wässrigen Suspension vorliegt und wobei in Schritt b) die Zementzusammensetzung in ein Ölbohrloch eingebracht wird.

## Claims

1. Calcium aluminate cement, including a calcium aluminate with a first crystallised mineralogical phase of calcium dialuminate CA2 comprising one calcium oxide CaO for two aluminium oxides Al₂O₃ and a second crystallised mineralogical phase of dicalcium alumina silicate C2AS comprising two calcium oxides CaO for one aluminium oxide Al₂O₃ and one silicon dioxide SiO₂,
**characterised in that** the mass fraction of all of said first and second mineralogical phases in said calcium aluminate is greater than or equal to 80%.

2. The calcium aluminate cement according to claim 1, wherein said calcium aluminate also comprises an amorphous portion, of which the mass fraction in said calcium aluminate is less than or equal to 20%.

3. The calcium aluminate cement according to one of claims 1 and 2, wherein said calcium aluminate further comprises a third crystallised mineralogical phase of monocalcium aluminate CA comprising one calcium oxide CaO for one aluminium oxide Al₂O₃ and/or a fourth crystallised mineralogical phase of hexa-calcium aluminate CA6 comprising one calcium oxide CaO for six aluminium oxides Al₂O₃, the mass fraction of all of the third and fourth mineralogical phases in said calcium aluminate being less than or equal to 20%.

4. The calcium aluminate cement according to one of claims 1 to 3, wherein said calcium aluminate further comprises an additional mineralogical phase of sulfocalcium aluminate C4A3$ comprising four calcium oxides CaO for three aluminium oxides Al₂O₃ and one sulphur oxide SO₃.

5. The calcium aluminate cement, according to one of claims 1 to 4, comprising, by weight with respect to the total weight of said calcium aluminate:
- 0% to 5% of an iron oxide Fe₂O₃,
- 0% to 5% of a titanium oxide TiO₂,
- 0% to 5% of a sulphur oxide SO₃,
- 0% to 5% of a magnesium oxide MgO,
- 0% to 2% of alkaline compounds.

6. The calcium aluminate cement according to one of claims 1 to 5, having the form of a powder that has a Blaine specific surface area measured according to standard NF-EN-196-6 ranging between 2200 square centimetres per gram and 4500 square centimetres per gram, preferably between 2900 and 3900 square centimetres per gram.

7. The calcium aluminate cement according to one of claims 1 to 6, comprising, by weight with respect to the total weight of said calcium aluminate:
- 50% to 60% of first crystallised mineralogical phase CA2,
- 26% to 32% of second crystallised mineralogical phase C2AS,
- 2.5% to 3.5% of third crystallised mineralogical phase CA,
- 0.5% to 1.5% of a fifth crystallised mineralogical phase of tetracalcium ferro-aluminate C4AF,
- 1 0% to 15% of additional crystallised mineralogical phases.

8. The calcium aluminate cement according to one of claims 1 to 7, comprising 0.5% to 15% of additional mineralogical phase of sulfocalcium aluminate C4A3$ by weight with respect to the total weight of said calcium aluminate.

9. Cementitious composition comprising at least the calcium aluminate cement according to one of claims 1 to 8 mixed with water, and possibly cementitious additions such as fly ash and/or a granulated blast furnace slag and/or a silica flour and/or silica fume and/or metakaolin, granulates such as quartz and/or fine limestone and/or sand, and adjuvants.

10. Use of the calcium aluminate cement according to one of claims 1 to 8, according to which:
a) a cementitious composition is realised by mixing at least said calcium aluminate cement with water,
b) said cementitious composition is set in place,
c) said cementitious composition is heated to a temperature ranging between 50°C and 300°C, preferably between 80°C and 280°C, in such a way as to favour the setting of the cementitious composition.

11. The use of the calcium aluminate cement according to claim 10, according to which, in the step a), the cementitious composition has the form of an aqueous suspension, and according to which in the step b), the cementitious composition is placed in an oil drilling well.
